# EUROPÄISCHE PATENTANMELDUNG

(11) **EP 3 477 916 A1**
(43) Veröffentlichungstag der Anmeldung: **01.05.2019**
(21) Anmeldenummer: 18201587.5
(22) Anmeldetag: 19.10.2018
(51) Int. Cl.: H04L 29/08, H04W 40/24

(54) **VERFAHREN ZUM AUSLESEN VON DATEN AUS IN EINEM GEBÄUDE INSTALLIERTEN ENDGERÄTEN UND DATENERFASSUNGSSYSTEM**

(30) Priorität: 24.10.2017 DE 102017124797
(71) Anmelder: Techem Energy Services GmbH, 65760 Eschborn (DE)
(72) Erfinder: Simon, Winfried, 64579 Gernsheim (DE); Schulz, Hans-Jürgen, 61381 Friedrichsdorf (DE); Wurl, Andreas, 61462 Königstein (DE)
(74) Vertreter: Keil & Schaafhausen Patent- und Rechtsanwälte PartGmbB

(57) **Zusammenfassung**

Es werden ein Verfahren und ein Datenerfassungssystem zum Auslesen von Daten aus in einem Gebäude (8.X) installierten Endgeräten (2.X) beschrieben, bei dem die Daten von den Endgeräten (2.X) an in dem Gebäude (8.X) installierte Datensammler (3.X) übertragen werden und von den Datensammlern (3.X) an eine Zentrale (4) weiter übertragen werden, in der die Daten der Endgeräte (2.X) gespeichert werden. Jeder Datensammler (3.X) empfängt Datentelegramme aller für ihn empfangbaren Endgeräte (2.X) und erstellt eine Empfangsinformationsliste (EIL), in der eine Gerätekennung jedes von ihm empfangenen Endgeräts (2.X) enthalten ist. Jeder Datensammler (3.X) überträgt die Empfangsinformationsliste (EIL) über die Mobilfunk-Kommunikationsstrecke (5) an die Zentrale (4), die für jeden Datensammler (3.X) eine Übertragungsliste (UTL) mit einer Gerätekennung der Endgeräte (2.X) erstellt. Der Datensammler überträgt nach Erhalt der Übertragungsliste (UTL) von der Zentrale (4) über die Mobilfunk-Kommunikationsstrecke (5) die empfangenen Datentelegramme der Endgeräte (2.X), deren Gerätekennung in der Übertragungsliste (UTL) enthalten ist, über eine Mobilfunk-Kommunikationsstrecke (5) an die Zentrale (4). (Fig. 1)

## Beschreibung

Die Erfindung betrifft ein Verfahren zum Auslesen von Daten aus in einem Gebäude installierten Endgeräten sowie ein entsprechend zur Durchführung des Verfahrens eingerichtetes Datenerfassungssystem gemäß dem Oberbegriff der Ansprüche 1 und 11.

Bei einer erfindungsgemäß bevorzugten Anwendung des Verfahrens sind die auszulesenden Daten insbesondere Messwerte und/oder Statuswerte der Endgeräte, bspw. Verbrauchserfassungswerte, Sensorwerte, Alarmwerte, Gerätestatuswerte oder dgl. Entsprechend können die Endgeräte insbesondere Messgeräte oder Sensorgeräte, wie Verbrauchserfassungsgeräte, Heizkostenverteiler, Wasserzähler, Wärmezähler, Kältezähler, Stromzähler, Gaszähler, Rauchwarnmelder, Temperaturmessgeräte, Feuchtigkeitsmessgeräte oder dgl. sein.

Bei dem vorgeschlagenen Verfahren werden die Daten von den Endgeräten an in dem Gebäude installierte Datensammler übertragen und von den Datensammlern an eine Zentrale weiter übertragen, in der die Daten der Endgeräte, vorzugsweise in einer Datenbank und einem Rechensystem, gespeichert werden, wobei die folgenden Schritte durchgeführt werden:
a) Jedes Endgerät sendet die Daten als Datentelegramm in einer Funkkommunikation aus. Die Funkkommunikation der Endgeräte kann vorzugsweise unidirektional erfolgen, so dass das Endgerät keine Kenntnis von einem möglichen Empfänger haben muss. Das Verfahren kann aber in gleicher Weise auch in einer bidirektionalen Funkkommunikation zwischen dem Endgerät und dem Empfänger (Datensammler) ausgebildet sein.
b) Die Datentelegramme des Endgeräts werden von (mindestens) einem in Funkreichweite des Endgeräts installierten Datensammler empfangen, wobei in dem Gebäude vorzugsweise mehrere Datensammler so installiert sind, dass ein Datentelegramm eines der Endgeräte in seiner Funkreichweite von mindestens zwei Datensammlern empfangbar ist. In einer Gebäudeinstallation können aber auch immer Endgeräte vorhanden sein, die nur von einem Datensammler empfangen werden können. Auch diese Fälle schließt das erfindungsgemäß vorgeschlagene Verfahren mit ein. Die Datensammler sind vorzugsweise batteriebetriebene Geräte, wobei die Betriebsdauer der Geräte ohne Batteriewechsel optimaler Weise auf 10 Jahre oder mehr ausgelegt ist, um Serviceeinsätze zum Batterietausch vor Ort zu vermeiden.
c) Der Datensammler leitet die Daten über eine Mobilfunk-Kommunikationsstrecke, bspw. mit einem in dem Datensammler installierten Mobilfunk-Modem, an die Zentrale weiter. Das Weiterleiten in die Zentrale bedeutet nicht, dass eine direkte Kommunikationsstrecke zwischen dem Datensammler und der Zentrale aufgebaut werden muss. Es ist gemäß einem bevorzugten Anwendungsfall des Verfahrens sogar vorgesehen, dass das Weiterleiten der Daten durch den Datensammler durch ein Ablegen der Daten in einem Cloud-Speicher erfolgt, auf den die Zentrale zugreifen kann. Das Weiterleiten der Daten an die Zentrale kann also durch Ablegen der Daten in einen sowohl von dem Datensammler als auch von der Zentrale zugänglichen Datenspeicher erfolgen, so dass ohne eine direkte Kommunikationsverbindung zwischen dem Datensammler und der Zentrale ein Weiterleiten der Daten erfolgen kann, ohne dass die Daten synchronisiert werden (müssen). Die Daten in dem Cloud-Speicher können verschlüsselt sein und müssen nicht (vollständig) durch den Datensammler lesbar (im Sinne von entschlüsselbar) sein. Informationen zur eindeutigen Identifikation des Endgeräts (bspw. eine Endgeräte-ID bzw. eine Endgerätekennung) sind vorzugsweise aber auch durch den Datensammler lesbar (im Sinne von verarbeitbar) sein.

Die Funkreichweite der Endgeräte ist kein statischer, sondern ein dynamischer Bereich um das Endgerät, der sich bspw. durch Änderungen im Gebäude (Baumaßnahmen, Stellen von Möbeln, Störsender oder dgl.) zeitabhängig verändern kann. Die Aussage "wobei vorzugsweise mehrere Datensammler so installiert sind, dass ein Datentelegramm eines der Endgeräte in seiner Funkreichweite von mindestens zwei Datensammlern empfangbar ist" bedeutet in diesem Zusammenhang, dass bei der Installation darauf geachtet wird, dass innerhalb einer üblichen oder durchschnittlichen Funkreichweite eines Endgeräts mindestens zwei Datensammler installiert sind, wobei die Datensammler im selben Gebäude oder in einem Nachbargebäude oder im Freien, bspw. an einem Laternenmast installiert, sind. Auch letzteres soll durch den Begriff "in einem Gebäude installierten Datensammler erfasst sein, insofern als der Datensammler einem Gebäude zugeordnet ist und Gebäudedaten empfängt, auch wenn er im bautechnischen Sinne außerhalb des Gebäudes angeordnet ist.

Dies bedeutet jedoch nicht, dass die Datentelegramme jedes Endgeräts überhaupt oder zeitlich durchgängig auch von zwei Datensammlern empfangen werden oder werden müssen. Aufgrund von Änderungen der Funkbindungen in dem Gebäude kann es zeitabhängig zu unterschiedlichen Situationen bei der Empfangbarkeit kommen. Bei der Installation lässt sich eine grundsätzliche Empfangbarkeit eines Endgeräts durch mehr als zwei Datensammler dadurch erreichen, dass während der Installation darauf geachtet wird, dass jedes Endgerät zum Zeitpunkt der Installation von mindestens zwei Datensammlern empfangen wird. Dies kann vor Ort noch während der Installation bspw. durch Auslesen von Datensammlern (bspw. deren Protokolle oder Empfangsinformationsliste) festgestellt werden. Es ist bevorzugt auch möglich, dass jeder Datensammler die von ihm über die gesamte Dauer der Installation jemals empfangen Endgeräte dokumentiert.

Es ist erfindungsgemäß sogar bevorzugt, dass ein Datentelegramm von jedem Endgerät tatsächlich in möglichst mindestens zwei Datendammlern empfangen werden kann. Dies ist jedoch nicht immer möglich oder nötig. Das erfindungsgemäße Verfahren ist grundsätzlich auch realisiert, wenn keines der Endgeräte in einer Installation tatsächlich von zwei Datensammlern empfangen wird, die Datensammler aber dazu eingerichtet sind oder eingerichtet werden können, das beschriebene Verfahren dann auszuführen, sobald das Datentelegramm eines Endgeräts in mehr als einem Datensammler empfangen wird. Dies kann auch in einer bestehenden Installation durch Vorsehen zusätzlicher Datensammler erreicht werden.

In einer üblichen Installation in einem Gebäude werden Datentelegramme einer Vielzahl von Endgeräten tatsächlich durch mehr als einen Datensammler desselben und/oder eines benachbarten Gebäudes empfangbar sei, und lediglich eine kleinere Anzahl (im Sinne von weniger als die Hälfte oder einem noch kleineren Anteil der Endgeräte) nur durch einen Datensammler empfangbar sein. Dies kann so beschrieben werden, dass "die Datentelegramme von im Wesentlichen eines jeden Endgeräts" durch mehrere (d.h. mehr als einen) Datensammler empfangbar ist. Für einzelne Endgeräte der Gebäudeinstallation kann auch darauf verzichtet werden, eine mehrfache Empfangbarkeit seiner Datentelegramme durch mehrere Datensammler vorzusehen, bspw. wenn ein Endgerät funktechnisch in dem Gebäude nur an einer Stelle empfangbar ist oder der Installationsaufwand für eine mehrfache Empfangbarkeit zu hoch ist. Auch eine derartige Gebäudeinstallation soll durch den Anspruchswortlaut und die nachfolgende Erläuterung von Ausführungsbeispielen der Erfindung erfasst sein, genauso wie eine Gebäudeinstallation, in der die Datentelegramme eines jeden Endgeräts tatsächlich durch mehrere Datensammler empfangen werden.

Das Datentelegramm, mit dem ein Endgerät seine Daten zum Empfang durch einen Datensammler aussendet, kann aus einem einzelnen Funktelegramm oder mehreren Funktelegrammen bestehen, die nach nacheinander ausgesandt werden. Unter dem "Empfang eines Endgeräts durch den Datensammler" wird verstanden, dass der Datensammler ein Datentelegramm des Endgeräts empfängt.

Unter "Übertragen bzw. Weiterleiten der Daten" bzw. dem "Aufbau einer Kommunikationsverbindung zwischen dem Datensammler und der Zentrale" wird im Rahmen dieser Offenbarung - abweichend von dem üblichen Verständnis in der Kommunikationstechnik - nicht nur der Aufbau einer direkten Kommunikationsverbindung zwischen dem Datensammler und der Zentrale verstanden, so dass Kommunikationsschnittstellen von Datensammler und Zentrale über ein Kommunikationsprotokoll direkt miteinander kommunizieren. Vielmehr ist darunter als ein besonders bevorzugtes Verfahren auch zu verstehen, dass der Datensammler eine Verbindung zu einem Zugang in eine Cloud (Cloud-Speicher) aufbaut und seine Daten in den Cloud-Speicher überträgt, in dem die Daten für einen beliebigen, aber autorisierten weiteren Zugriff gespeichert werden. In diesem Sinn greift dann die Zentrale auf die in der Cloud gespeicherten Daten zu, entweder über eine weitere Verbindung zwischen Zentrale und Cloud-Speicher und/oder über eine in der Cloud gespeicherte und ausgeführte Applikation (Cloud-Computing), die Aufgaben der Zentrale wahrnimmt, aber technisch nicht zu der Zentrale (insbesondere den Rechenanlagen der Zentrale) gehört. Die Cloud und/oder der Cloud-Speicher können von dem IT-System der Zentrale also kommunikationstechnisch und funktionell getrennt sein und autark funktionieren. Insbesondere können die Cloud und die Cloud-Speicher als externe Produkte von Servicedienstleistern (Cloud-Services) zur Verfügung gestellt und betrieben werden.

Diese Speicherung der Daten in einem Cloud-Speicher kann sowohl für eine "Übertragung" von dem Datensammler zu der Zentrale als auch für eine Übertragung von der Zentrale zu dem Datensammler verwendet werden. Der Vorteil ist, die keine Übertragung im Sinne einer üblichen Kommunikationstechnik stattfindet, sondern eine zentrale Speicherung in einem Bereich, auf den verschiedene Anwendungen zugreifen können. Weil die Anwendungen (ggf. auch verschiedene IT-Systeme) auf dieselben Daten zugreifen, entfällt eine ansonsten aufwendige Synchronisation der aus verschiedenen Anwendungen (auch verschiedenen IT-Systemen) stammenden Daten.

Im Zuge des erfindungsgemäß vorgeschlagenen Verfahrens ist dabei für die Organisation vorgesehen, dass jeder Datensammler die für ihn empfangbaren Datentelegramme der Endgeräte mindestens einmal empfängt und eine Empfangsinformationsliste erstellt, in der eine Gerätekennung jedes von ihm empfangenen Endgeräts enthalten ist. Mit anderen Worten empfängt der Datensammler alle Endgeräte, in deren Funkreichweite der Datensammler zum Zeitpunkt der Aussendung liegt, und trägt eine Gerätekennung aller Endgeräte (Endgeräte-ID), von denen Datentelegramme empfangen werden, in eine Empfangsinformationsliste ein. Dies erfolgt mindestens einmal nach der Inbetriebnahme, bspw. angestoßen durch ein Inbetriebnahmeverfahren für einen bestimmten Empfangszeitraum, bspw. eine oder mehrere Stunden, damit alle nach und nach installierten und in Betrieb genommenen Endgeräte erfasst werden. Vorzugsweise erfolgt dies jedoch nicht nur einmal, sondern zu vorgegebenen Zeiten (regelmäßig, zufällig verteilt oder auf externe Anforderung bspw. durch ein Service- oder Inbetriebnahmegerät oder durch die Zentrale über die Mobilfunk-Kommunikationsstrecke). Dadurch werden Änderungen in den Funkbedingungen des Gebäudes oder die Installation neuer Endgeräte automatisch zu den vorgegebenen Zeiten erfasst.

Vorzugsweise wird diese Liste als Gesamtliste der von dem Datensammler nach seiner Installation (Erstinstallation oder Service-Nachinstallation) jemals empfangenen Endgeräte geführt. Dies kann im Datensammler selbst oder in der bevorzugt Zentrale erfolgen, indem die Empfangsinformationsliste an die Zentrale weitergeleitet wird. Bei einer Realisierung einer solchen Gesamtliste im Datensammler würde die Empfangsinformationsliste dort bei einer Erst- oder Service-Nachinstallation erzeugt und bei jedem weiteren Empfang ggf. um neu empfangene Endgeräte ergänzt. Bei einem Service, bspw. im Zuge einer Service-Nachinstallation, kann die Empfangsinformationsliste zurückgesetzt werden. Ebenso kann die Empfangsinformationsliste "Remote", bspw. durch einen Befehl der Zentrale, zurückgesetzt werden.

Die Empfangsinformationsliste enthält im Sinne inhaltlicher Informationen bevorzugt nur die Gerätekennungen der empfangbaren Endgeräte, um die Datenmenge der Liste so klein wie möglich zu halten.

Alternativ kann die Empfangsinformationsliste, bspw. regelmäßig nach jedem oder nach einer vorgebbaren Anzahl von Empfangsvorgängen von Datentelegrammen der Endgeräte, automatisch im Datensammler auch neu erstellt werden, bspw. nach einer täglichen oder monatlichen Empfangsphase des Datensammlers, während der der Datensammler Datentelegramme der Endgeräte empfängt. Ein Empfangsfenster bzw. eine Empfangsdauer während eines Empfangsvorgangs ist vorzugsweise mindestens zweimal länger als der normale Sendezyklus der Aussendung von Datentelegrammen durch die Endgeräte, so dass der Datensammler während eines Empfangsvorgangs alle Endgeräte empfängt bzw. empfangen sollte, in deren Funkreichweite er installiert (positioniert) ist. Die (jeweils aktuelle) Empfangsinformationsliste kann (nach vorgegebenen Regeln/Kriterien) an die Zentrale weitergeleitet werden, welche dann die Verwaltung der Gesamtliste übernimmt.

Sofern die einem Datensammler zugeordnete Empfangsinformationsliste in einem Datensammler nach jeder Empfangsphase neu erstellt wird, oder auch unabhängig davon, kann in der Zentrale eine Backend-Endgeräteliste (im Sinne der vorerwähnten Gesamtliste) geführt werden, die die jeweils in der Zentrale empfangenen Empfangsinformationslisten auswertet und alle Endgeräte enthält, die von dem Datensammler jemals empfangen werden konnten, ggf. auch mit weiteren Informationen, die nachstehend noch erläutert werden. Eine solche Backend-Endgeräteliste wird (bspw. nach der Erstinstallation eines Datensammlers) bei der ersten Übertragung einer ersten Empfangsinformationsliste an die Zentrale gefüllt und kann selbstlernend ausgestaltet sein, d.h. sich über einen längeren Zeitraum selbständig aus neuen Empfangsinformationslisten aktualisieren.

Der Vorteil einer solchen (vorzugsweise immer aktualisierten) Backend-Endgeräteliste in der Zentrale ist, dass in der Zentrale immer eine vergleichsweise aktuelle Information zu dem sich in dem Gebäude ergebenden Funknetz vorliegt, auch wenn neue Empfangsinformationslisten nur in größeren Zeitintervallen von dem Datensammler übertragen werden. Damit ist die Zentrale unabhängig davon, wie und/oder wie jeder Datensammler seine Empfangsinformationsliste bildet.

Die Empfangsinformationsliste kann bei jeder Verbindung über die Mobilfunk-Kommunikationsstrecke, in einem vorgegebenen Zeitzyklus, bei Änderungen an der Liste (d.h. zu vorgebbar definierten Zeitpunkten) und/oder auf Anfrage durch die Zentrale von dem Datensammler an die Zentrale übermittelt werden. Insbesondere eine Anforderung durch die Zentrale oder eine Übersendung bei Änderungen in der Liste sind im Hinblick auf eine Reduzierung der insgesamt während der Batterielebensdauer des Datensammlers zu übertragenden Datenmenge (und damit einem ressourcenschonenden Energieverbrauch) besonders vorteilhaft.

Erfindungsgemäß ist weiter vorgesehen, dass jeder Datensammler zu vorgebbar definierten Zeitpunkten, in vorgebbaren Intervallen, nach Anfrage durch die Zentrale über die Mobilfunk-Kommunikationsstrecke oder in anderer Weise konfigurierbar die Empfangsinformationsliste über die Mobilfunk-Kommunikationsstrecke an die Zentrale überträgt. Insbesondere kann vorgesehen sein, dass ein Datensammler bei der ersten Inbetriebnahme nach einer ersten Empfangsphase eine Mobilfunkverbindung zu der Zentrale (womit auch die bereits beschriebene Cloud gemeint sein kann) aufbaut und die Empfangsinformationsliste überträgt. Dies hat zum einen den Vorteil, dass der Installateur noch vor Ort feststellen kann, ob die Mobilfunkverbindung funktioniert. Gleichzeitig kann er nach der Empfangsphase die durch den Datensammler empfangenen Endgeräte feststellen, indem er bspw. die Empfangsinformationsliste aus dem Datensammler mit einem Servicegerät ausliest oder die in der Zentrale (bspw. einem Cloud-Speicher) gespeicherte Empfangsinformationsliste oder Backend-Endgeräteliste abruft.

Nach der Inbetriebnahme und/oder jeder Aktualisierung und Übertragung der Empfangsinformationsliste an die Zentrale liegen auch der Zentrale die insgesamt empfangbaren Endgeräte aus dem Gesamtbestand aller installierten Endgeräte und deren mögliche Zuordnung zu Datensammlern vor, über die die Daten an die Zentrale weitergeleitet werden können.

Erfindungsgemäß wird vorgeschlagen, dass die Zentrale für jeden Datensammler eine Übertragungsliste mit den Gerätekennungen der Endgeräte erstellt, deren Datentelegramme an die Zentrale weitergeleitet werden sollen. Diese Übertragungsliste wird von der Zentrale an den Datensammler übermittelt.

Ähnliche Datenerfassungssysteme sind im Rahmen der Verbrauchswerterfassung bekannt. So wird bspw. in der EP 2 282 602 B1 ein hierarchisch gegliedertes Funknetzwerk mit einer Primärfunkkommunikation von Endgeräten zu Datensammlern, einer hierarchisch organisierten Sekundärfunkkommunikation von den einzelnen Datensammlern zu einem gebäudezentralen Masterdatensammler und einer Weiterübertragung der Daten von dem gebäudezentralen Masterdatensammler zu einem entfernten Leitstand zur weiteren Verarbeitung. Hierbei ist es notwendig, die Kommunikationslast der einzelnen batteriebetriebenen Datensammler zu steuern, um die gewünschten Einsatzzeiten der Datensammler zu gewährleisten und andererseits eine zuverlässige Übertragung der Daten aller Datengeräte zu gewährleisten. Hier führt der (nicht batteriebetriebene) Masterdatensammler eine Simulation des Funknetzes durch und ordnet einzelne Endgeräte bestimmten Datensammlern zum Empfang zu. Dieses Verfahren bedeutet gebäudeseitig einen erheblichen Optimierungs- und Steuerungsbedarf und erfordert eine Sekundärkommunikation zwischen verschiedenen Datensammlern, um ein Durchleiten der Daten aller Endgeräte zu dem einen Masterdatensammler zu ermöglichen.

Aus der EP 2 661 093 A2 ist ein Verfahren zur Übertragung von Verbrauchsdaten bekannt, bei dem für jeden Endpunkt in einem Versorgungs-Kommunikationsnetz ein einziger primärer Datensammler benannt wird, der für die Übermittlung von Ressourcenverbrauchsdaten der ihm als primärem Datensammler zugewiesenen Endpunkte an eine Zentrale verantwortlich ist. Wenn die Zentrale keine Ressourcenverbrauchsdaten von einem oder mehreren Endpunkten empfängt, kann die Zentrale die fehlenden Ressourcenverbrauchsdaten von einem oder mehreren sekundären oder tertiären Datensammlern anfordern, die Ressourcenverbrauchsdaten von dem einen oder den mehreren Endpunkten empfangen (auch wenn diese für die Weiterleitung nicht verantwortlich sind). Zu diesem Zweck führt die Zentrale eine Managementliste, in der aufgeführt ist, welcher Datensammler jedem Endpunkt als primärer, sekundärer oder tertiärer Datensammler zugewiesen ist. Ferner sind in der Zentrale ein Endpunkt-Übertragungszeitplan und eine Datensammler-Berichtsliste gespeichert. Der Endpunkt-Übertragungszeitplan gibt an, wann die ihre Ressourcenverbrauchsdaten aussenden. Die Datensammler-Berichtsliste zeigt an, welche Endpunkte welchem der primären Datensammler zugeordnet ist. In dem Datensammler wird eine Liste geführt, für welche Endpunkte der Datensammler als primärer, sekundärer und tertiärer Datensammler zugewiesen ist (entsprechend der Management-Liste). Für diese Endpunkte speichert der Datensammler die von den Endgeräten empfangene Ressourcenverbrauchsdaten. Ferner verfügt der Datensammler über einen Upload-Zeitplan, wann und wie oft der Datensammler die Ressourcenverbrauchsdaten an die Zentrale übertragen muss.

Sofern zum Ende einer Berichtsperiode, wenn die Uploads der Ressourcenverbrauchsdaten von allen Datensammlern in der Zentrale vorliegen sollten, kann die Zentrale fehlende Ressourcenverbrauchsdaten eines Endgeräts in einer gesonderten Anforderung an die sekundären oder tertiären Datensammler nachfordern, auf die dieser sekundäre bzw. tertiäre dann noch einmal unmittelbar antwortet. Nachteilig ist dabei, dass durch die mehrfachen Übertragungen des Datensammlers (erste Übertragung als primärer Datensammler und weitere Übertragungen als sekundärer oder tertiärer Datensammler) ein erhöhter Energiebedarf bei dem Datensammler entsteht. Außerdem muss die Zentrale immer bis zum Ende des Berichtszeitraums des primären Datensammlers warten, bevor festgestellt werden kann, ob eine ergänzenden Anfrage an einen weiteren Datensammler, nämlich den für diesen Endpunkt sekundären oder tertiären Datensammler gestellt werden kann.

Vor diesem Hintergrund liegt die Aufgabe der vorliegenden Erfindung darin, ein Verfahren zur Datenübertragung und ein entsprechend eingerichtetes Datenerfassungssystem vorzuschlagen, das in einer zuverlässigen Datenübertragung die Daten der in einem Gebäude installierten Endgeräte an eine (lokal von den Endgeräten und dem Gebäude entfernte) Zentrale weiterleitet, einen geringen Energiebedarf bei den Datensammlern vorsieht und insgesamt flexibler ist.

Diese Aufgabe wird mit den Merkmalen des Verfahrens nach Anspruch 1 und den Merkmalen des Datenerfassungssystems nach Anspruch 11 gelöst.

Erfindungsgemäß wird zur Durchführung der Datenübertragung von der Zentrale für jede Datenübertragung von einem Datensammler an die Zentrale jeweils eine eigene Übertragungsliste übertragen. Diese Übertragungsliste wird also als Anforderung zur Übertragung der Daten oder zusammen mit einer solchen Anforderung von der Zentrale an den Datensammler übertragen oder weitergeleitet. In Reaktion auf eine solche Anforderung werden die Daten dann von dem Datensammler an die Zentrale übermittelt werden.
Dazu ist erfindungsgemäß vorgesehen, dass der Datensammler nach Erhalt der Übertragungsliste von der Zentrale die empfangenen Datentelegramme der Endgeräte, deren Gerätekennung in der Übertragungsliste enthalten ist, über die Mobilfunk-Kommunikationsstrecke an die Zentrale überträgt.

Gemäß einem besonders bevorzugten Aspekt der vorliegenden Erfindung kann die Zentrale Übertragungslisten vorsehen, mit denen nur die in der Zentrale aktuell noch benötigten Daten der Endgeräte angefordert werden. Für Daten eines Endgeräts, die bereits in der Zentrale vorhanden sind oder durch die Zentrale aus anderen Gründen nicht benötigt werden, wird von der Zentrale keine Gerätekennung dieses Endgeräts in die für die jeweils aktuelle Datenübertragung vorgesehene Übertragungsliste eingetragen, so dass die Daten dieses Endgeräts von dem Datensammler nicht mit übertragen werden, selbst wenn die Daten dieses Endgeräts in dem Datensammler gespeichert sind. Dadurch werden auch Ressourcen der Mobilfunk-Kommunikationsstrecke gespart (und damit bspw. datenmengenabhängige Kosten gespart und/oder die Übertragungssicherheit auf dem Übertragungskanal erhöht), weil nur die Daten übertragen werden, die durch die Zentrale angefordert bzw. für eine Servicedienstleistung, bspw. die verbrauchsabhängige Abrechnung, benötigt werden.

Mit anderen Worten wird durch die Zentrale vor jeder Datenübertragung von einem Datensammler unter Verwendung der in der Zentrale jeweils bereits vorliegenden Empfangsinformationsliste eine aktualisierte und an die in der Zentrale bereits vorliegenden Daten angepasste, eigene (d.h. an die jeweiligen Umstände angepasste) aktuelle Übertragungsliste erzeugt, die insbesondere nur die Daten enthält, die zum Zeitpunkt dieser Datenübertragung in der Zentrale noch nicht vorliegen.

Um die Kommunikationslast über die Mobilfunk-Kommunikationstrecke erfindungsgemäß zu reduzieren kann vorzugsweise also vorgesehen werden, dass die Zentrale vor dem Eintragen einer Gerätekennung eines Endgeräts in die Übertragungsliste für einen Datensammler überprüft, ob ein aktuelles Datentelegramm des Endgeräts bereits an die Zentrale weitergeleitet wurde, und dass die Zentrale die Gerätekennung des Endgeräts nur dann in die Übertragungsliste eingibt/einträgt, wenn ein aktuelles Datentelegramm noch nicht an die Zentrale weitergeleitet wurde.

Da der Datensammler vor dem Weiterleiten der Datentelegramme an die Zentrale über die Mobilfunk-Kommunikationsstrecke (d.h. die Durchführung der Datenübertragung) erfindungsgemäß immer erst die aktuelle Übertragungsliste erhält, kann so eine teure und die Batteriekapazität des Datensammlers besonders belastende Mobilfunkkommunikation minimiert werden, weil eine redundante Übertragung der Daten von einem Endgerät zu mehreren Datensammlern nicht zu einer redundanten Weiterleitung dieser Datentelegramme über die Mobilfunk-Kommunikationsstrecke zu der Zentrale führt. Anders als im Stand der Technik beschrieben muss keine erneute Anforderung zur Datenübertragung an einen weiteren sekundären oder tertiären Datensammler gesendet werden, wenn wie in der EP 2 661 093 A2 vorgeschlagen, erst nach dem Ende einer Berichtsperiode (Auslesezeitraum) festgestellt wird, dass Daten eines Endgeräts nicht vorliegen, ob der primäre Datensammler diese hätte übertragen sollen. Sofern keine oder eine leere Übertragungsliste an den Datensammler geschickt wird, fehlt eine Anforderung zur Übertragung der Daten an die Zentrale, und der Datensammler leitet die Daten / Datentelegramme nicht weiter. Immer wenn die Daten weitergeleitet werden, hat der Datensammler immer erst eine aktuelle Übertragungsliste erhalten.

Anstelle einer statischen Zuordnung von primären Datensammlern, die für die Übertragung eines festen Datentelegramms zuständig sind, wählt die vorliegende Erfindung also eine dynamische Zuordnung von Endgeräten, die durch einen Datensammler in der jeweils anstehenden Datenübertragung übertragen werden sollen. Die Auswahl geschieht unabhängig davon, ob ein Datensammler als primärer Datensammler von vorneherein für dieses Endgerät zuständig wäre. Als Kriterium für das Eintragen einer Gerätekennung in die jeweils aktuelle Übertragungsliste wird stattdessen das letztlich entscheidende Kriterium verwendet, ob die benötigten Daten in der Zentrale bereits vorhanden sind. Ist dies der Fall, müssen sie nicht noch einmal übertragen werden. Die Auswahl der zu übertragenden Daten erfolgt also dynamisch ausgehend von der aktuellen Datenlage. Hierdurch ist das Verfahren wesentlich flexibler als die im Stand der Technik beschriebenen Übertragungsverfahren. Gleichzeitig wird viel Energie für unnötige Übertragungen und den erneuten Aufbau von Datenverbindungen über die Mobilfunk-Kommunikationsstrecke vermieden.

Durch den gewählten Ansatz, für die Durchführung der Datenübertragung von der Zentrale jeweils eine Übertragungsliste an den Datensammler zu übertragen und nur in Reaktion auf eine solche Anforderung die Daten von dem Datensammler an die Zentrale zu übermitteln, ist eine einzige Kommunikation zwischen dem Datensammler und der Zentrale in einem Auslesezeitraum (definiert durch die Zeitintervalle, in denen üblicherweise eine Übertragung zwischen Datensammler und Zentrale stattfindet) ausreichend. Daher ist es erfindungsgemäß besonders bevorzugt, dass für die Durchführung der Datenübertragung zur Übermittlung der Daten der Endgeräte in einem vorgegeben Auslesezeit nur maximal einmal eine Mobilfunk-Kommunikationsstrecke zwischen einem Datensammler (insbesondere von jedem Datensammler) in dem Datenerfassungssystem aufgebaut wird, in der sowohl die Übertragungsliste und/oder Anforderung zur Übertragung von Datentelegrammen der Endgeräte von der Zentrale an den Datensammler als auch die Daten der in der Übertragungsliste enthaltenen Endgeräte an die Zentrale übertragen werden. Sofern alle Daten, die ein Datensammler übertragen könnte, bereits in der Zentrale vorhanden sind, kann erfindungsgemäß vorgesehen sein, dem Datensammler keine oder eine leere Übertragungsliste zu übersenden. Eine leere Übertragungsliste kann auch eine Übertragungsliste sein, bei der alle Endgeräte mit dem Status "nicht zu übertragen", bspw. durch eine Bitkennung, gekennzeichnet sein.

Ein aktuelles Datentelegramm in der Zentrale kann dadurch ermittelt werden, dass die Datensammler üblicherweise in bestimmten Zeitintervallen, bspw. einmal täglich, eine Mobilfunkverbindung über die Mobilfunk-Kommunikationsstrecke zu der Zentrale aufbauen und ggf. die gespeicherten Datentelegramme übertragen. Wenn bereits ein Datentelegramm eines Endgeräts aus diesem Zeitintervall (Auslesezeitraum) in der Zentrale vorliegt, wird dieses als aktuelles Datentelegramm angesehen, so dass in diesem Zeitintervall (Auslesezeitraum) kein weiteres Datentelegramm für dieses Endgerät angefordert werden muss. Entsprechend wird die Gerätekennung nicht mehr in Übertragungslisten für andere Datensammler eingetragen, die dieses Endgerät auch empfangen können (Gerätekennung in Empfangsinformationsliste) und/oder die Datentelegramme dieses Endgeräts speichern (Gerätekennung in Speicherliste, soweit diese auch vorhanden ist, wie später erläutert). Weil ein Datensammler die empfangenen und gespeicherten Datentelegramme nur nach Anforderung der Zentrale und Empfang einer dabei übertragenen Übertragungsliste weiterleitet, lässt sich so eine nicht benötigte Doppelübertragung identischer Datentelegramme desselben Endgeräts von verschiedenen Datensammlern effektiv verhindern.

Der Vorteil des erfindungsgemäß vorgeschlagenen Verfahrens in dieser Ausgestaltung liegt auch darin, dass dieser Optimierungsschritt offline und in der Zentrale erfolgt, ohne dass eine Mobilfunkverbindung zu dem Datensammler während dieser Optimierung aufrechterhalten werden muss. Vielmehr kann die Zentrale nach dem Empfang eines Datentelegramms eines Endgeräts überprüfen, ob weitere Datensammler Datentelegramme dieses Endgeräts zur Weiterleitung an die Zentrale speichern. Dies kann bspw. dadurch erfolgen, dass die Zentrale überprüft, ob dieses Endgerät in der Speicherliste und/oder der Empfangsinformationsliste anderer Datensammler enthalten ist. Die Zentrale identifiziert so diese Datensammler und streicht die entsprechende Gerätekennung aus der Übertragungsliste dieser Datensammler, was wie bereits beschrieben entweder durch Löschen einer Gerätekennung oder Markieren einer Nicht-Übertragung der Datentelegramme für ein bestimmtes Endgerät, bspw. durch die bereits beschriebene Bitkennung, erfolgen kann. Wenn dieser Datensammler dann eine Anforderung zur Datenübertragung zusammen mit der Übertragungsliste erhält, enthält diese Anforderung nicht die Endgeräte, von denen ein aktuelles Datentelegramm bereits in der Zentrale vorliegt. Ein Datentelegramm dieser Endgeräte wird daher nicht noch einmal über die Mobilfunk-Kommunikationsstrecke übertragen.

Für Datentelegramme verschiedener Endgeräte können ggf. auch verschieden lange Zeitintervalle vorgesehen werden, in denen die Datentelegramme übermittelt werden sollen. Solange ein Datentelegramm eines Endgeräts in der Zentrale aus dem aktuell noch andauernden Zeitintervall vorliegt, wird das Datentelegramm als aktuell angesehen und das zugehörige Endgerät nicht in die Übertragungsliste für einen Datensammler aufgenommen.

Das Optimieren der Datenübertragung zum Auswählen der Datensammler, durch welche die Datentelegramme eines bestimmten Endgeräts an die Zentrale weitergeleitet werden, kann in einer bevorzugten Variante des erfindungsgemäß vorgeschlagenen Verfahrens dadurch erleichtert werden, dass die Zentrale eine als Endgeräte-Empfangsliste bezeichnete Geräteliste führt, in der für jedes Endgerät die Datensammler aufgeführt sind, die Datentelegramme dieses Endgeräts an die Zentrale weiterleiten können.

Dazu kann die Zentrale überprüfen, in welchen Speicherlisten der jeweiligen Datensammler die Gerätekennung dieses Endgeräts enthalten ist, und einen Datensammler (bspw. eine Datensammler-Gerätekennung) dann in die Geräteliste für das Endgerät (Endgeräte-Empfangsliste) übernehmen, wenn das Endgerät in der Speicherliste für den Datensammler geführt ist. Dann wird das Datentelegramm in dem Datensammler gespeichert und kann weiterleitet werden. Wenn keine Speicherliste, sondern nur eine Empfangsinformationsliste für den Datensammler existiert, kann in einer Variante des erfindungsgemäßen Verfahrens davon ausgegangen werden, dass ein aktuelles Datentelegramm von jedem empfangenen Endgerät gespeichert wird bzw. ist. In diesem Fall kann der Datensammler (bspw. die Datensammler-Gerätekennung) dann in die Geräteliste für dieses Endgerät (Endgeräte-Empfangsliste) aufgenommen werden.

Zusätzlich oder alternativ können Endgeräten und/oder Datensammlern (bspw. in der Empfangsinformationsliste, der Endgeräte-Empfangsliste und/oder der Backend-Endgeräteliste oder einer entsprechenden Datenbank der Zentrale) Geokoordinaten zugewiesen sein, die den Installationsort kennzeichnen. Diese Geo-Koordinaten können bspw. Längen- und Breitengrade bzw. GPS-Koordinaten oder die Adressdaten der Installationsorte sein. In diesem Fall können die Datensammler, deren Übertragungslisten nach dem Empfang eines Datentelegramms eines Endgeräts angepasst werden müssen, auch über die Geokoordinaten bestimmt oder zumindest eingegrenzt werden, bspw. durch eine geeignete Umkreisfilterung und Selektion. Dies verkürzt die Zeit für die Überarbeitung der Übertragungslisten oder für die Erstellung der Endgeräte-Empfangslisten.

Dann kann die Zentrale nach dem Empfang eines Datentelegramms eines Endgeräts sehr schnell die Datensammler identifizieren und die diesen zugewiesenen Übertragungslisten anpassen, die von anderen Datensammlern als oder zusammen mit der Anforderung zur Übertragung der gespeicherten Datentelegramme erhalten werden. Diese anpassten Übertragungslisten werden also nach dem Aufbau der Mobilfunkkommunikation durch die entsprechenden Datensammler an diese übertragen, so dass keine Datentelegramme der Endgeräte mehr an die Zentrale weitergeleitet werden, solange für diese Endgeräte in der Zentrale aktuelle Datentelegramme vorliegen. Nach Ablauf des aktuellen Zeitraums, bspw. des Tags, werden die Übertragungslisten dann zurückgesetzt und enthalten zunächst wieder die Gerätekennungen aller durch diesen Datensammler empfangenen Endgeräte, deren Datentelegramme zur Weiterleitung an die Zentrale gespeichert werden. Dieser aktuelle Zeitraum wird auch als Auslesezeitraum oder Auslesezyklus bezeichnet.

Die Überarbeitung der relevanten Übertragungslisten findet erst statt, wenn das Datentelegramm eines Endgeräts von dem ersten Datensammler übermittelt wurde und eine Verarbeitung des Datentelegramms in der Zentrale stattfindet. Es ist vorteilhaft, wenn diese Verarbeitung möglichst zeitnah nach dem Empfang erfolgt, damit die Überarbeitung bzw. Anpassung der Übertragungslisten schnell vorgenommen und abgeschlossen wird. Nach abgeschlossener Anpassung der Übertragungslisten werden diese für die jeweiligen Datensammler zur Übertragung (bspw. auf eine der beschriebenen Arten) zur Verfügung gestellt.

Da die Empfangsinformationsliste gemäß einer Ausführungsform der Erfindung sowohl lokal in dem Datensammler als auch in der Zentrale gespeichert sein kann, muss die Übertragungsliste nicht notwendiger Weise die Gerätekennungen der zu übertragenden Endgeräte in lesbarer Klarschrift enthalten. Vielmehr kann die Übertragungsliste vielmehr lediglich eine Nummer der zu übertragenden Endgeräte enthalten, die der Position der Endgeräte in der Empfangsinformationsliste entspricht. Statt einer der Position der Endgeräte in der Empfangsinformationsliste entsprechenden Nummer kann auch eine Bitliste übertragen werden, in der für jedes Endgerät eine Bitposition (vorzugweise in der Reihenfolge der Listung der Empfangsinformationsliste oder nach einem anderen Sortierkriterium) vorgegeben sein, wobei eine Bitformation, bspw. die Information "1", eine Übertragung der Daten und die andere Bitinformation, bspw. die Information "0", keine Übertragung der Daten anzeigt. Hierdurch wird eine (gegenüber der Übertragungsliste mit den Gerätekennungen in lesbarer Klarfassung) komprimierte Übertragungsliste erzeugt, die bei der Übertragung kürzer und damit ressourcensparender (Übertragungskapazität und Übertragungsenergie) ist.

Das erfindungsgemäß vorgeschlagene Verfahren hat den Vorteil, dass Zentrale einen Überblick über die empfangbaren Endgeräte und deren Zuordnung zu Datensammlern in Funkreichweite der Endgeräte hat, d.h. eine zentrale Verwaltung der Endgeräte und Datensammler stattfinden kann. Dies erfolgt grundsätzlich auch Liegenschafts- oder Gebäude-übergreifend, weil es keine Beschränkung auf einzelne Gebäude in der Verwaltung gibt. Damit können Datensammler auch Datentelegramme von Endgeräten aus anderen Liegenschaften- oder Gebäuden an die Zentrale weiterleiten, so dass die installierten Datensammler optimal ausgenutzt werden können, ohne Rücksicht auf verwaltungstechnische Restriktionen (bspw. die Zuordnung der Endgeräte zu einer Liegenschaft) zu nehmen. Dies kann sich insbesondere dann besonders vorteilhaft auswirken, wenn mehrere Liegenschaften in räumlicher Nachbarschaft betreut werden, bei denen die Funkreichweite der Endgeräte überlappen.

Ein weiterer Vorteil liegt darin, dass das Datenerfassungssystem aus Endgeräten und Datensammlern auf Grundfunktionen beschränkt (Erfassen der Daten in den Endgeräten, Übermittlung an Datensammler, Weiterleitung an Zentrale von den Datensammlern) ist, ohne dass eine Verwaltungsorganisation in dem Datenerfassungssystem notwendig ist bzw. realisiert wird. In dem Datenerfassungssystem müssen keine Informationen zum Installationsort (Liegenschaft) und deren Umgebung vorgehalten werden. Dies stellt auch einen Vorteil bei dem Einhalten von Datenschutzbestimmungen dar, weil die Daten in den lokalen Systemen überhaupt nicht vorgehalten werden müssen. Auch können die Endgeräte und vor allem die Datensammler gerätetechnisch einfacher und mit einer weniger komplexen Logik bei der Inbetriebnahme und Steuerung ausgestaltet werden. Dies resultiert in kostengünstigeren Installationen.

Bei einer erfindungsgemäß bevorzugten Variante des erfindungsgemäßen Verfahrens kann der Datensammler bei dem Empfang eines Datentelegramms durch ein Endgerät einen Wert für die Empfangsqualität und/oder einen Wert für die Empfangswahrscheinlichkeit des Datentelegramms ermitteln und in die Empfangsinformationsliste eintragen.

Bei dem ersten Empfang eines Endgerätes wird erfindungsgemäß in jedem Fall eine Gerätekennung des Endgeräts, beispielsweise eine eindeutige Geräte-ID, in die Empfangsinformationsliste eingetragen, optional zusätzlich auch ein Wert für die Empfangsqualität, bspw. der in diesem Zusammenhang häufig ermittelte und dem Fachmann bekannte RSSI-Wert, und/oder die Empfangswahrscheinlichkeit, bspw. die Anzahl der empfangenen Datentelegramme dieses Endgeräts in einem Empfangszeitfenster definierter Länge.

Wenn die Länge des Empfangszeitfensters größer ist als die Dauer eines vorgegebenen zeitlichen Sendezyklus der Endgeräte, mit dem diese die Datentelegramme aussenden, müsste ein solches Datentelegramm eines Endgeräts innerhalb des Empfangszeitfensters bei stabilen Funkbedingungen mehrfach empfangen werden. Dann ist bspw. die Anzahl der im Empfangszeitfenster empfangenen Datentelegrammes eines definierten Endgeräts ein Maß für die Empfangswahrscheinlichkeit.

Vorzugsweise beträgt die Länge des Empfangszeitfensters des Datensammlers ein (bspw. ganzzahliges) Vielfaches der Dauer eines Sendezyklus des Endgeräts, bspw. das Zwei-, Drei- oder Vierfache von vorgesehenen Sendezyklen, die häufig im Bereich von wenigen Minuten liegen, bspw. etwa 0,5 Minuten für mobile Funkempfänger, die für "Walk-By" oder "Drive-By" Ablesung verwendet werden, bis zu 15 Minuten für fest installierte (also "stationäre") Funkempfänger. In diesem Fall sollte bei einer stabilen Funkqualität und ohne das Auftreten von Funktelegrammkollisionen immer dieselbe Anzahl von Datentelegrammen eines definierten (im Sinne: genau eines ausgewählten) Endgeräts empfangen werden.

In einer bevorzugten Ausführung wird im Falle eines mehrfachen Empfangs der Datentelegramme des einen definierten Endgeräts innerhalb des Empfangszeitfensters des Datensammlers nur das erste Datentelegramm abgespeichert. Bei allen weiteren empfangen Datentelegrammen dieses Endgeräts wird der jeweilige Wert für die Empfangsstärke, bspw. der dem Fachmann bekannte und vom Funkempfangschip automatisch ermittelte RSSI-Wert, durch den Datensammler für jedes Endgerät zu einer Größe "Endgerät-RSSI-Summenwert" im Empfangszeitfenster addiert und gespeichert. Zusätzlich wird die Anzahl der im Empfangszeitfenster empfangenen Datentelegramme des Endgeräts als zweiter Wert ermittelt und gespeichert, so dass durch eine einfache Division des Endgerät-RSSI-Summenwerts mit der Anzahl der empfangenen Datentelegramme dieses einen Endgeräts ein mittlerer RSSI-Wert für das Endgerät entweder durch den Datensammler selbst errechenbar ist oder durch die Zentrale errechenbar ist, sofern beide Werte als Teil der Empfangsliste in die Zentrale übertragen werden.

In einer Variante kann der Datensammler das gespeicherte Datentelegramm des Endgeräts bei jedem neuen Empfang mit dem empfangenen Datentelegramm überschreiben, so dass am Ende des Empfangszeitfensters das letzte empfangene Datentelegramm des Endgerätes mit den aktuellsten Verbrauchs- oder Sensor-Daten gespeichert wird (sofern sich die Daten ändern). Die Bildung eines mittleren RSSI-Werts kann hierbei auf die vorher beschrieben Art analog erfolgen.

Wie in der Empfangsinformationsliste können auch in einer (in der Zentrale aus den übertragenen Empfangsinformationslisten abgeleiteten) Backend-Endgeräteliste als weitere Informationen eine oder mehrere der nachfolgend gelisteten Informationen enthalten sein: mittlere und/oder letzte RSSI-Werte, mittlere und/oder letzte Empfangswahrscheinlichkeiten, Zeitpunkt des letzten Empfangs. Auch diese Werte können in Backend-Gerätelisten mit dem Empfang neuer (aktuellerer) Empfangsinformationslisten ergänzt werden.

In Weiterentwicklung des erfindungsgemäß vorgeschlagenen Verfahrens kann in der Zentrale für jeden Datensammler unter Verwendung der Empfangsinformationsliste eine Speicherliste mit Gerätekennungen der Endgeräte, deren Datentelegramme in dem Datensammler nach dem Empfang gespeichert werden sollen, erzeugt und bei einer späteren, vorzugweise der nächsten, Verbindung über die Mobilfunk-Kommunikationsstrecke an den Datensammler übertragen werden. Nach Empfang einer solchen Speicherliste speichert der Datensammler nur die von solchen Endgeräten empfangenen Datentelegramme, deren Gerätekennung in der Speicherliste enthalten ist.

Durch die Speicherliste kann die Zentrale also steuern und vorselektieren, welche Endgeräte überhaupt dafür in Frage kommen, dass ein Datensammler ein Datentelegramm dieses Endgeräts speichert und damit Speicherplatz in der Recheneinheit des Datensammlers oder einem Speicher-IC belegt und welche er entsprechend der Übertragungsliste davon dann weiterleiten soll. Wenn bestimmte Endgeräte in einer Gebäudeinstallation durch sehr viele Datensammler empfangen werden, kann durch die Speicherliste also eine Vorselektion getroffen werden, welche Endgeräte einem Datensammler zur Verarbeitung, d.h. insbesondere Speicherung und ggf. Weiterleitung, zugeordnet werden, um eine zuverlässige Auslesung der Daten im gesamten Datenerfassungssystem (Fernablesesystem) zu gewährleisten. Dies ermöglicht eine Verwaltung der Datensammler und der ihnen zugeordneten Endgeräte, ohne dass Vor-Ort, d.h. insbesondere in den Datensammlern, Kenntnis über die lokalen Gegebenheiten der Endgeräte und Datensammler-Installation vorliegen und diese zusammen mit bestimmten Empfangsbedingungen bei der Optimierung in einer Recheneinheit der Datensammler ausgewertet werden muss. Hierdurch werden Hardwareressourcen bei den lokal installierten Endgeräten und Datensammlern eingespart bzw. damit gleichbedeutend können kostengünstigere Bauteile mit weniger Speicherkapazität verwendet werden.

Die Speicherliste kann neben der Empfangsinformationsliste als Basis für die überhaupt für einen Datensammler zur Speicherung der empfangenen Endgeräte zur Verfügung stehenden Endgeräte auch den Gesamt-Endgerätebestand (im Sinne der insgesamt in allen Installationen installierten stehenden Endgeräte) und/oder bereits in anderen Datensammlern getroffene Zuordnungen berücksichtigen. Hieraus kann insbesondere die Restmenge der noch nicht empfangenen und/oder gespeicherten Endgeräte gebildet werden, die in jedem Fall in einem Datenspeicher gespeichert werden sollen, wenn ein solches (bisher noch nicht empfangenes, aber zum Gesamt-Endgerätebestand der installierten Datensammler gehörendes) Endgerät empfangen wird. Hierdurch erfolgt eine automatische, von Zuordnungen zu einzelnen Gebäuden unabhängige System, mit dem eine große Flexibilität bei dem Empfang einzelner Endgeräte erreicht wird, ohne dass eine logische Zuordnung zu bestimmten Liegenschaften oder logischen Einheiten innerhalb einer Liegenschaft berücksichtigt werden muss.

Bei der Auswahl der Endgeräte für die Speicherliste eines Datensammlers kann die Qualität der Funkstrecke mit bewertet werden. Bspw. können Endgeräte in Datensammlern mit einem besonders guten Empfang für diese Endgeräte gespeichert werden. Zur Beurteilung können die Empfangswahrscheinlichkeiten oder RSSI-Werte, die in den Empfangsinformationslisten und ggf. in Backend-Gerätelisten gespeichert sind, herangezogen werden. Mit anderen Worten kann die Speicherliste also aus aktuell empfangenen Empfangsinformationslisten oder einer in der Zentrale geführten Backend-Geräteliste (wie vorbeschrieben) gebildet werden.

Bei der vorbeschriebenen Optimierung kann die Zentrale ausreichend Redundanzen im Empfang einzelner Endgeräte durch eine Mehrzahl von Datensammlern zulassen, so dass selbst bei Ausfall eines Datensammlers oder einer Funkverbindung zu einem Datensammler noch alternative Datensammler für das Auslesen der Daten, d.h. das Empfangen der Endgeräte-Datentelegramme und deren Weiterleiten an die Zentrale, zur Verfügung stehen. Hier kann bspw. ein redundantes Speichern von Datentelegrammen eines Endgeräts in zwei bis drei Datensammlern (soweit die Datentelegramme eines Endgeräts in so vielen Datensammlern empfangen werden) vorgesehen werden, wobei diese Redundanz in der Regel ausreichend ist. Es ist erfindungsgemäß auch vorteilhaft, die Anzahl der Datensammler, die Datentelegramme desselben Endgeräts speichern, auf eine definierte Maximalzahl von Datensammlern (Anzahl Redundanzen) zu begrenzen, um die Ressource Speicherplatz eines Datensammlers zu berücksichtigen und die Maximalzahl der durch einen Datensammler zu verarbeitenden (insbesondere zu empfangenden und ggf. weiterzuleitenden Endgeräte auf ein sinnvolles Maß zu begrenzen, das das Erreichen der Betriebsdauer auf Basis der vorhandenen Batteriekapazität ermöglicht. Ziel sollte eine möglichst gleichmäßige Verteilung der Anzahl von in Datensammlern gespeicherten Datentelegrammen verschiedener Endgeräte sein. Die Maximalanzahl kann unter Berücksichtigung der vorstehenden Kriterien bspw. fest vorgegeben (etwa eine Maximalanzahl von 3, 4, 5 oder 6) oder automatisch mittels in einem Programm zur Datenverarbeitung umgesetzten Algorithmen ermitteltet werden.

Ohne Vorliegen einer Speicherliste kann erfindungsgemäß vorgesehen sein, dass dann in dem Datensammler alle von Endgeräten empfangenen Datentelegramme gespeichert werden, damit diese entsprechend der Übertragungsliste übertragen werden können. Durch die Speicherliste kann also der in dem Datensammler vorhandener Speicherplatz ressourcenschonender eingesetzt werden, oder anders ausgedrückt müssen nur die Datentelegramme zwischengespeichert werden, die später auch durch die Zentrale ggf. zur Übertragung abgefragt werden.

Die für das Erzeugen der Speicherliste notwendige Logik ist entsprechend einer Ausführung des vorgeschlagenen Verfahrens nur in der Zentrale vorhanden, die entsprechend auch über Informationen über räumlich benachbarte Datensammler verfügt. Erfindungsgemäß kann die gesamte Optimierung der Datenerfassung in den Gebäudeinstallationen nur in der Zentrale (oder der bereits erwähnten Cloud durch entsprechende Cloud-Applikationen) durchgeführt werden, wobei ggf. sogar Datensammler aus benachbarten Gebäudeinstallationen mit in die Optimierung der Fernablesung bzw. Fernüberwachung einer Liegenschaft einbezogen werden. Im Rahmen der Beschreibung des erfindungsgemäß vorgeschlagenen Verfahrens bedeuten "Zentrale" und "Cloud" dasselbe, insoweit ein zentraler Ort verwendet wird, um eine gebäude- oder installationsübergreifende Vielzahl von Endgeräten und Datensammlern zu verwalten bzw. das auf diesen Geräten ablaufende Verfahren zu optimieren.

Die Speicherliste kann entweder mit der Empfangsinformationsliste übereinstimmen (dann wird mindestens ein Datentelegramm aller unterschiedlichen empfangenen Endgeräte gespeichert) oder eine Teilliste (im Sinne einer mathematischen Teilmenge) der Empfangsinformationsliste sein (dann wird mindestens ein Datentelegramm einer Selektion aller unterschiedlichen empfangenen Endgeräte gespeichert). Die Speicherliste enthält im Sinne inhaltlicher Informationen bevorzugt nur die Gerätekennungen der zu speichernden Endgeräte, um die Datenmenge so klein wie möglich zu halten. Ggf. kann eine Speicherliste auch nur die Position des Endgeräts in der aktuellen Empfangsinformationsliste sein.

Da die Speicherliste gemäß einer Variante der Erfindung sowohl lokal in dem Datensammler als auch in der Zentrale gespeichert werden kann bzw. sein kann, muss die Übertragungsliste nicht notwendiger Weise die Gerätekennungen der zu übertragenden Endgeräte in lesbarer Klarschrift enthalten. Vielmehr kann die Übertragungsliste vielmehr lediglich eine Nummer der zu übertragenden Endgeräte enthalten, die der Position der Endgeräte in der Speicherliste entspricht. Statt einer der Position der Endgeräte in der Speicherliste entsprechenden Nummer kann auch eine Bitliste (Bitvektor) übertragen werden, in der für jedes Endgerät eine Bitposition vorzugweise in der Reihenfolge der Listung der Speicherliste oder nach einem anderen Sortierkriterium vorgegeben sein, wobei eine Bitformation, bspw. die Information "1", eine Übertragung der Daten und die andere Bitinformation, bspw. die Information "0", keine Übertragung der Daten anzeigt. Hierdurch wird eine (gegenüber der Übertragungsliste mit den Gerätekennungen in lesbarer Klarfassung) komprimierte Übertragungsliste erzeugt, die bei der Übertragung kürzer und damit ressourcensparender (Übertragungskapazität und Übertragungsenergie) ist.

Gemäß einer bevorzugten Ausführungsform des vorgeschlagenen Verfahrens kann vorgesehen werden, dass die Datentelegramme der Endgeräte (zumindest teilweise) verschlüsselt sind. In dem Datensammler kann ein Datentelegramm dann unverändert gespeichert werden, also als sogenanntes "Rohdatenfunktelegramm", mit der durch die Endgeräte vorgesehenen und vorgenommenen Verschlüsselung insbesondere der Nutzdaten (Payload), sofern eine Speicherung des Datentelegramms in dem Datensammler überhaupt erfolgt.

Nicht gespeicherte Datentelegramme werden nach dem Empfang aus einem temporären Arbeitsspeicher gelöscht. Ein Zwischenspeichern des Datentelegramms während des Empfangs wird bis zu der Entscheidung, ob das Datentelegramm in dem Datensammler zur Weiterleitung gespeichert wird oder durch Löschen im Arbeitsspeicher verworfen wird, nicht als "Speichern in dem Datensammler" verstanden.

Im Falle (ganz oder teilweise) verschlüsselt empfangener Datentelegramme kann erfindungsgemäß besonders bevorzugt vorgesehen sein, dass die verschlüsselt in dem Datensammler zur Weiterleitung an die Zentrale gespeicherten Datentelegramme auch verschlüsselt (d.h. unverändert in der von dem Endgerät erhaltenen Verschlüsselung) weitergeleitet werden. Dabei kann als Datentelegramm sowohl das gesamte Datentelegramm mit einem verschlüsselten Dateninhalt (insbesondere umfassend die auch als Payload bezeichneten Nutzdaten) und einem unverschlüsselten Telegramm-Header mit der Gerätekennung als auch nur der verschlüsselte Dateninhalt (insbesondere Payload) verstanden werden. Das unveränderte Speichern bezieht sich also zumindest auf die eigentlichen Nutzdaten (Payload); mögliche Änderungen in einem (nicht verschlüsselten) Header oder einem anderen nicht verschlüsselten Teil des Datentelegramms sollen im Rahmen dieser Offenbarung nicht als Änderung des Datentelegramms gelten.

Eine Entschlüsselung des verschlüsselten Dateninhalts (d.h. insbesondere der als Payload bezeichneten Nutzdaten) erfolgt dann erfindungsgemäß erst in der Zentrale, wobei vorzugsweise der für die Entschlüsselung notwendige Schlüssel nur in der Zentrale und nicht in einem Datensammler (d.h. in keinem Datensammler) vorhanden ist. Das gewährleistet eine maximale Datensicherheit auf dem Kommunikationsweg, weil der für die Übertragung zwischengeschaltete Datensammler das Datentelegramm (d.h. insbesondere dessen die Nutzdaten enthaltenden Dateninhalt) gar nicht entschlüsseln kann. Die Nutzdaten können insbesondere liegenschaftsbezogene Informationen und Verbrauchswerte sein. Allgemeiner ausgedrückt können dies alle dem Datenschutz unterliegende Informationen sein.

Eine einfache Zeitplanung lässt sich erreichen, wenn jeder Datensammler zu vorgegebenen (d.h. vorgebbar definierten) Zeitpunkten innerhalb eines Auslesezeitraums (bspw. einmal pro Tag) mindestens eine Empfangsphase zum Empfang von durch die Endgeräte ausgesandten Datentelegrammen ausführt (bspw. ein Empfangszeitfenster öffnet) und nach der Empfangsphase (sofort oder nach einen vorgegebenen bzw. vorgebbar definierten Zeit) eine Mobilfunk-Kommunikationsstrecke zu der Zentrale aufbaut.

Es kann erfindungsgemäß vorgesehen werden, dass der Datensammler dann, wenn er nicht alle in seiner Speicherliste enthaltenen Endgeräte empfängt, eine oder mehrere weitere Empfangsphasen innerhalb eines Auslesezeitraum durchführt (bspw. mehrmals ein Empfangszeitfenster öffnet). Die Anzahl der weiteren Empfangsphasen (keine, eine, zwei oder mehr) kann auch von Batteriemanagementvorgaben für den Datensammler und einer Abschätzung des aktuellen Batterieladezustands abhängen. Es kann auch vorgesehen werden, dass die Mobilfunk-Kommunikationsstrecke zu der Zentrale erst dann aufgebaut wird, wenn alle Endgeräte, deren Datensammler gespeichert werden sollen, auch tatsächlich empfangen wurden, oder eine vorgegebene maximale Anzahl von Empfangsphasen erreicht ist. Damit wäre sichergestellt, dass alle durch die Zentrale angeforderten Datentelegramme auch übertragen werden können, sofern diese von den Endgeräten innerhalb des Auslesezeitraums empfangen werden.

Auch die Zeiten des Datensammlers für den Aufbau der Mobilfunk-Kommunikationstrecke und/oder das Durchführen einer Empfangsphase können (vorzugsweise durch die Zentrale) innerhalb des Auslesezeitraums vorgegeben werden, um ein ausgewogenes Batteriemanagement zwischen insbesondere benachbarten Datensammlern zu erreichen, die Datentelegramme derselben Endgeräte speichern und somit auch übertragen können. Wäre bei der Mobilfunk-Übertragung immer ein Datensammler zeitlich vor einem anderen Datensammler, würde immer dieser Datensammler die Datentelegramme eines Endgeräts übertragen. Daher ist es erfindungsgemäß sinnvoll, die Reihenfolge des Aufbaus von Mobilfunk-Kommunikationsstrecken durch die jeweiligen Datensammler zu variieren. Gemäß einer bevorzugten Ausführungsform kann dies durch die Zentrale unter Abschätzung der aktuellen Batterieladung der jeweiligen Datensammler erfolgen. Dies würde aber erfordern, dass auch die Zeitpunkte für die Empfangsphasen und/oder den Aufbau der Mobilfunkkommunikation von der Zentrale an die Datensammler übertragen werden muss, bspw. zusammen mit einer Anforderung und Übertragung der Übertragungsliste. Um diese zusätzliche Kommunikation zu vermeiden, kann auch eine zufällige (d.h. stochastische bzw. quasi-stochastische) Variation dieser Zeitpunkte innerhalb des Auslesezeitraums vorgesehen werden. Hierdurch ließe sich zumindest eine stochastisch gleiche Verteilung der Batterielast für die verschiedenen Datensammler erreichen. Vorteilhaft könnte auch eine Kombination sein, bei der eine zufällige Variation der Sendezeitpunkte erfolgt, bis ein Datensammler eine (bspw. im Vergleich zu den Datensammlern der Umgebung oder bezogen auf die ausgelegte Betriebsdauer) zu niedrigere Batterieladung aufweist. Eine solche Bewertung kann in einem von der Zentrale durchgeführten Batteriemanagement erfolgen.

Der Aufbau der Mobilfunk-Kommunikationsstrecke zu der Zentrale kann unmittelbar nach der Empfangsphase oder in einem zeitlichen Abstand zu der Empfangsphase erfolgen. Der zeitliche Abstand kann dem Datensammler fest vorgegeben (bspw. bei der Installation oder Herstellung) und/oder (bspw. durch die Zentrale) konfigurierbar vorgegeben sein. Sofern eine Verbindung über die Mobilfunk-Kommunikationsstrecke nicht zustande kommt, können nach definierten Regeln erneute Verbindungsversuche erfolgen, bis die Verbindung zustande kommt.

Auch unabhängig davon, ob der Verbindungsaufbau nach einer Empfangsphase des Datensammlers oder - auch erfindungsgemäß - nach einem anderen definierten Zeitschema erfolgt, wird die Mobilfunk-Kommunikationsstrecke bevorzugt durch einen Datensammler hergestellt. Dies hat den Vorteil, dass in dem Datensammler keine Mobilfunk-Bereitschaftsphasen vorgesehen werden müssen, die viel Energie verbrauchen. Dies ist besonders in dem erfindungsgemäß besonders bevorzugten Fall vorteilhaft, wenn nicht nur die - üblicherweise ohnehin batteriebetriebenen - Endgeräte, sondern auch die Datensammler batteriebetrieben sind. Der Batteriebetrieb vereinfacht die Installation und gibt eine hohe Positionsfreiheit bei der Installation der Datensammler.

Jeder Datensammler kann erfindungsgemäß nach dem Aufbau einer Mobilfunkkommunikation eine Anforderung von der Zentrale empfangen, die eine oder mehrere der nachfolgenden Informationen enthält:
- Übertragungsliste
- Anforderung zur Übertragung von Datentelegrammen der Endgeräte
- Speicherliste
- Anforderung der Empfangsinformationsliste
- Anforderung von Gerätestatusdaten der Datensammler und Parametrierdaten für Datensammler
- Zeitpunkte für das Durchführen einer Empfangsphase und/oder das Aufbauen der Mobilfunk-Kommunikationsstrecke.

Das Übertragen der Übertragungsliste kann gleichzeitig als Anforderung zur Übertragung von Datentelegrammen der Endgeräte verstanden werden. Nach Erhalt der Übertragungsliste beginnt der Datensammler dann, das in dem Datensammler gespeicherten Datentelegramm des in der Übertragungsliste gelisteten Endgeräts zu übertragen. Dies erfolgt für jedes in der Übertragungsliste gelistete Endgerät.

Während der mit der Zentrale bestehenden Mobilfunkkommunikation (über die Mobilfunk-Kommunikationsstrecke) kann von der Zentrale auch eine neue Speicherliste, Zeitpunkte für das Durchführen einer Empfangsphase und/oder das Aufbauen der Mobilfunk-Kommunikationsstrecke übertragen werden oder eine Empfangsinformationsliste angefordert werden. Dies kann Teil der Übersendung von Parametrierdaten für Datensammler oder dem Empfangen von oder Gerätestatusdaten der Datensammler sein. Auch ein Firmware-Update kann bspw. als Parametrierdaten übertragen werden. Vorzugsweise kann vorgesehen sein, dass nur eine Mobilfunkkommunikation während eines Auslesezeitraums stattfindet.

Unabhängig von dem Erhalten einer gesonderten Anforderung durch die Zentrale kann auch vorgesehen sein, dass der Datensammler Warnmeldungen über seinen Zustand (bspw. Fehlermeldungen, Batterieladezustandswarnungen oder dgl.) an die Zentrale überträgt.

Insgesamt können derartige Gerätestatusdaten der Datensammler und Parametrierdaten für die Datensammler zusammen mit den bereits beschriebenen Empfangsinformationslisten, Speicherlisten, Übertragungslisten, Backend-Endgeräteliste und/oder Endgeräte-Empfangsliste, die alle in der Zentrale bekannt sind, für Optimierung der Kommunikation genutzt werden, bei denen jeweils auf den Gesamtbestand der Daten und Informationen zugegriffen werden kann. Bei der Optimierung kann die Zentrale ein Batteriemanagement und/oder eine Verwaltung der Datensammler zur Kommunikationsoptimierung und/oder Funknetzstabilität durchführen.

Ein Beispiel für eine solche Optimierung kann die Größe des Speichers im Datensammler sein. Dies begrenzt die Anzahl der speicherbaren Telegramme im Datensammler und sorgt dafür, dass keine Datentelegramme von Endgeräten durch einen Speicherüberlauf in dem Datensammler verloren gehen. Ein weiteres, sinnvolles Beispiel für eine Optimierung betrifft die Größe der Batterie des Datensammlers bzw. die Restkapazität der Batterie des Datensammlers. Dadurch wird das Übertragungsvolumen des Datensammlers über die Batterielebenszeit gedeckelt, wobei von einem mittleren Ladungsbedarf für eine Funk-übertragung ausgegangen werden oder dieser für einen Datensammler auch ermittelt und als Gerätestatusdaten von dem Datensammler an die Zentrale übermittelt werden kann. Bei redundantem Empfang von Endgeräten (bzw. deren Datentelegrammen) durch mehrere Datensammler besteht die Möglichkeit Datensammler gezielt zu entlasten, indem die Speicher und Übertragungslisten der einzelnen Datensammler entsprechend beeinflusst werden. Auch durch eine Vorgabe der Reihenfolge der Datensammler, in der eine Mobilfunk-Kommunikationstrecke zu der Zentrale aufgebaut wird, kann in das Batteriemanagement der Datensammler eingegriffen werden, weil ohne steuernden Eingriff in der Regel der erste von mehreren Datensammlern, die redundant Datentelegramme derselben Datentelegramme gespeichert haben, die höchste Kommunikationslast trägt.

Es kann auch eine Optimierung des Datensammlerbestands erfolgen, indem ggf. bestimmte Datensammler stillgelegt werden. Ein Stilllegen kann durch die Zentrale dadurch erfolgen, dass ihnen zwar eine Speicherliste übermittelt wird, diese aber leer ist. In diesem Fall würde der Datensammler ggf. nicht in jedem Auslesezeitraum eine Empfangsphase starten und/oder nicht in jedem Auslesezeitraum eine Mobilfunk-Kommunikationstrecke zu der Zentrale aufbauen. Damit dieser Datensammler aber ggf. auch über einen Fernzugriff wieder aktiviert werden kann, wäre es sinnvoll, wenn der Datensammler in einem Gerätemeldezyklus, der wesentlich länger sein kann als der Auslesezeitraum (bspw. einmal pro Woche, einmal oder zweimal pro Monat bei einem angenommenen Auslesezeitraum von einem Tag), eine Empfangsphase durchführt und/oder die Mobilfunk-Kommunikationsstrecke zu der Zentrale aufbaut. Nach dem Aufbau können dann entsprechende Listen übertragen werden, um den Datensammler wieder in das Kommunikationsnetz zu integrieren. In ähnlicher Weise können auch neue Datensammler immer nachinstalliert werden, die bei ihrer Installation eine Empfangsphase durchführen und die Empfangsinformationsliste an die Zentrale übertragen.

Das Übertragen und Empfangen kann, wie bereits erläutert, auch durch einen Zugriff auf einen gemeinsamen Datenspeicher, bspw. einen Cloud-Speicher, erfolgen, in dem die entsprechenden Informationen als aufrufbare bzw. ladbare Dateien abgelegt sind.

Ein wichtiger Vorteil des beschriebenen Datenerfassungssystems und des Verfahrens zum Auslesen der Daten liegt darin, dass das System mit den Komponenten Endgeräte und Datensammler, die lokal vor Ort installiert sind, auf die Grundfunktion Datenerfassung beschränkt und damit universell einsetzbar ist. Die Datensammler benötigen für die Organisation und Verwaltung ihrer Aufgaben in dem lokalen Funknetz und für die Mobilfunk-Kommunikationstrecke keinerlei Informationen zum Installationsort und ihrer Umgebung (Endgeräte, benachbarte Datensammler). Damit liegt die Verwaltung und Organisation des Datenerfassungssystems in der Zentrale, in der auch alle Informationen zum Gesamtsystem vorliegen und deren Hardware ohnehin über entsprechende Prozessor- und Energieressourcen verfügt. Der Rechenbedarf und die dafür benötigte Energie in den Datensammlern werden damit erfindungsgemäß reduziert und auf ein Minimum beschränkt.

Entsprechend bezieht sich die Erfindung auch auf Datenerfassungssystem mit den Merkmalen des Anspruchs 11, das zur Durchführung des vorbeschriebenen Verfahrens oder Teilen davon eingerichtet ist. Entsprechend weist das Datenerfassungssystem zum Auslesen von Daten Endgeräte auf, die in einem Gebäude installiert sind, die zu übertragenden Daten erfassen und als Datentelegramme in einer unidirektionalen oder bidirektionalen lokalen Funkkommunikation aussenden. Damit verfügen die Endgeräte zumindest über einen Sender, der die Datentelegramme zum lokalen Empfang in dem Gebäude oder dessen Umgebung aussendet, so wie dies bei AMR-Systemen (Automated Meter Reading) üblich ist.

Ferner weist das System Datensammler auf, die in Funkreichweite mindestens eines der Endgeräte installiert sind und Datentelegramme mit den Daten der Endgeräte in Funkreichweite über die lokale Funkkommunikation empfangen und in ihrem Speicher speichern, wobei jedes Endgerät von mindestens einem, vorzugsweise aber von mehreren Datensammlern empfangbar ist. Es ist durch Parametrierung vorgebbar, ob und ggf. welche Datentelegramme und/oder Datentelegrammarten von Endgeräten in dem Speicher des Datensammlers speicherbar sind. Damit verfügen die Datensammler zumindest über Empfänger, die die von den Endgeräten ausgesendeten Datentelegramme über die lokale Funkkommunikation empfangen.

Die Endgeräte und die Datensammler sind damit Teilnehmer eines lokalen Funkkommunikationsnetzes bspw. eines AMR-Systems. Im Falle einer bidirektionalen lokalen Funkkommunikation verfügen Endgeräte und Datensammler über Transceiver (Sendeempfänger) für das lokale Kommunikationssystem.

Eine Zentrale, die von jedem der Datensammler über eine Mobilfunk-Kommunikationsstrecke ansprechbar ist, erhält über diese Mobilfunk-Kommunikationsstrecke die Datentelegramme der Endgeräte von dem Datensammler weitergeleitet. Damit liegen die Datentelegramme der Endgeräte nach der Übertragung über die Mobilfunk-Kommunikationsstrecke in der Zentrale vor. Die Zentrale kann als ein Server mit einer Datenbank ausgestaltet sein, wobei ein Mobilfunk-Modem des Datensammlers bspw. eine direkte Kommunikationsverbindung zu dem Server, d.h. bspw. einen Webshare-Serverdienst des Servers, aufbaut. Es ist aber auch - wie bereits beschrieben - möglich, dass die Datenübertragung zwischen einem Datensammler und der Zentrale über einen Cloud-Zugang (zu einem Cloud-Speicher) erfolgt, auf den sowohl der Datensammler als auch die Zentrale gemeinsam zugreifen können. Der Zugriff des Datensammlers auf den Cloud-Speicher erfolgt dann über die Mobilfunk-Kommunikationsstrecke mittels des Mobilfunk-Modems. Die Zentrale kann gemäß der Erfindung über einen beliebigen Zugriff auf den Cloud-Speicher zugreifen, weil dies üblicher Weise über eine entsprechende Internet-Verbindung erfolgen wird.

Erfindungsgemäß weisen jedes Endgerät, jeder Datensammler und die Zentrale jeweils eine Recheneinheit auf, die zur Durchführung des vorbeschriebenen Verfahrens oder Teilen hiervon eingerichtet ist.

Vorzugsweise sind - zumindest - ein Teil der Endgeräte Sensorgeräte, Verbrauchserfassungsgräte und/oder Rauchwarnmelder. Diese Endgeräte können insbesondere auch batteriebetrieben sein.

Um eine von dem Stromnetz unabhängige Installation der Datensammler an Positionen mit einem guten Empfang für die Datentelegramme der Endgeräte zu ermöglichen, können gemäß einer bevorzugten Ausführung des erfindungsgemäßen Datenerfassungssystems auch die oder einige Datensammler batteriebetriebene Geräte sein.

Weitere Merkmale, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale den Gegenstand der vorliegenden Erfindung, auch unabhängig von ihrer Zusammenfassung in den Ansprüchen oder deren Rückbezügen.

Es zeigen:
- Figur 1: schematisch eine Ausführungsform eines erfindungsgemäßen Datenerfassungssystems mit Endgeräten, Datensammlern und einer Zentrale, bei dem Daten aus den Endgeräten ausgelesen und an die Zentrale übertragen werden;
- Figur 2: schematisch eine erste Ausführungsform eines erfindungsgemäßen Verfahrens zum Auslesen von Daten aus Endgeräten und Übertragen der Daten zu der Zentrale;
- Figur 3: schematisch eine zweite Ausführungsform eines erfindungsgemäßen Verfahrens zum Optimierung des Auslesens von Daten aus Endgeräten, das sich insbesondere an das Verfahren gemäß Figur 2 anschließen kann;
- Figur 4: schematisch eine dritte Ausführungsform eines erfindungsgemäßen Verfahrens zur Inbetriebnahme der Datensammler zum Auslesen von Daten aus Endgeräten;
- Figur 5: bespielhaft in dem erfindungsgemäßen Verfahren erzeugte Empfangsinformationsliste, Speicherliste und Übertragungsliste.

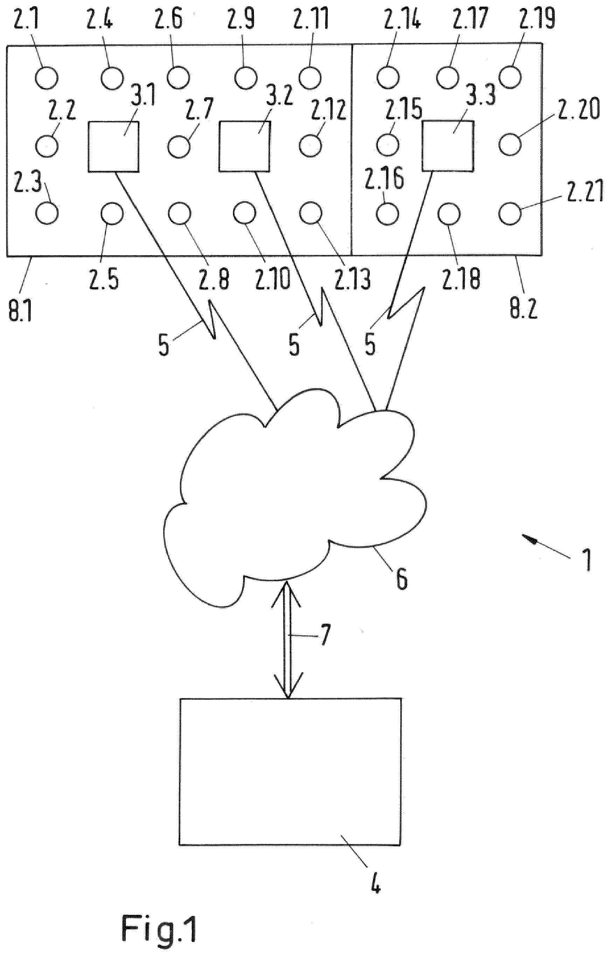

Bei dem in Figur 1 schematisch dargestellten Datenerfassungssystem 1 gemäß einer Ausführungsform der beschriebenen Erfindung sind insgesamt 21 Endgeräte 2.X, d. h. Endgeräte 2.1 bis 2.21, installiert, die Daten aus der Umgebung erfassen, gegebenenfalls aufbereiten und als Datentelegramme in einer Funkkommunikation aussenden. In Funkreichweite der Endgeräte 2.X sind Datensammler 3.X installiert, die die durch die Endgeräte 2.X ausgesendeten Datentelegramme empfangen. Um die 21 Endgeräte 2.X herum sind insgesamt drei Datensammler 3.1 bis 3.3 verteilt.

Die Endgeräte 2.X und die Datensammler 3.X sind dabei so angeordnet, dass jedes der 21 Endgeräte 2.X von mindestens einem der Datensammler 3.X empfangen werden kann, wobei eine Vielzahl von Datentelegrammen der Endgeräte 2.X auch in mehreren Datensammlern 3.X empfangen werden können.

Dabei sind die Endgeräte 2.X und die Datensammler 3.X verschiedenen Gebäuden 8.X zugeordnet. Konkret sind die Endgeräte 2.1 bis 2.13 sowie die Datensammler 3.1 und 3.2 dem Gebäude 8.1 und die Endgeräte 2.14 bis 2.21 sowie der Datensammler 3.3 dem Gebäude 8.2 zugewiesen. Diese Informationen sind für die Realisierung des Datenerfassungssystems 1 und des vorgeschlagenen Verfahrens zum Auslesen der Daten aus den Endgeräten 2.X jedoch nicht von Bedeutung. Insbesondere muss weder den Endgeräten 2.X noch den Datensammlern 3.X ihre Zugehörigkeit zu einem der Gebäude 8.1 oder 8.2 bekannt sein.

Die von den Endgeräten 2.X empfangenen Datentelegramme werden nach bestimmten Regeln, die nachfolgend noch ausführlicher erläutert werden, in nicht explizit dargestellten Speichern der Datensammler 3.X gespeichert.

Die Datensammler 3.X verfügen über ein nicht explizit dargestelltes Mobilfunkmodem, über das die Datensammler 3.X eine Mobilfunk-Kommunikationsstrecke 5 zu einer Zentrale 4 aufbauen können. Damit ist die Zentrale 4 von jedem der Datensammler 3.X über die Mobilfunk-Kommunikationsstrecke 5 ansprechbar. Über diese Mobilfunk-Kommunikationsstrecke 5 werden die in einem der Datensammler 3.X gespeicherten Datentelegramme der Endgeräte 2.X an die Zentrale 4 weitergeleitet.

In dem in Figur 1 dargestellten Ausführungsbeispiel erfolgt das Weiterleiten der Datentelegramme über die Mobilfunk-Kommunikationsstrecke 5 dadurch, dass eine Mobilfunkkommunikation mit einem Cloud-Speicher 6 aufgebaut und die Datentelegramme mittels der Mobilfunkkommunikation in den Cloud-Speicher 6 übertragen und dort gespeichert werden. Die Zentrale 4 hat über einen gesicherten Internetzugriff 7 Zugriff auf den Cloud-Speicher 6 und kann so die in den Cloud-Speicher 6 übertragenen Datentelegramme einsehen und weiterverarbeiten.

Im Rahmen dieser Offenbarung wird die Übertragung der Datentelegramme von einem Datensammler 3.X in den Cloud-Speicher 6, auf den die Zentrale 4 Zugriff hat, auch als Übertragung oder Weiterleitung der Datentelegramme von dem Datensammler 3.X zu der Zentrale 4 verstanden. Entsprechendes gilt für eine Übertragung von der Zentrale 4 zu den Datensammlern 3.X.

Alternativ zu der dargestellten Ausführungsform wäre es natürlich auch denkbar, dass der Datensammler 3.X eine direkte Mobilfunkkommunikation über die Mobilfunk-Kommunikationsstrecke 5 zu der Zentrale 4 aufbaut. Dies wird klassischerweise unter einer Kommunikationsverbindung verstanden. Anstelle einer solchen direkten Übertragung hat das Speichern der Datentelegramme in einem gemeinsamen Cloud-Speicher 6 den Vorteil, dass für den Betrieb des Cloud-Speichers 6 kommerzielle Anbieter verwendet werden können, der Cloud-Zugang bzw. der Cloud-Speicher rund um die Uhr (24/7) zur Verfügung steht und ein gesonderter Datenspeicher mit aktuellen Daten zum Zugriff für viele Anwendungen verfügbar ist.

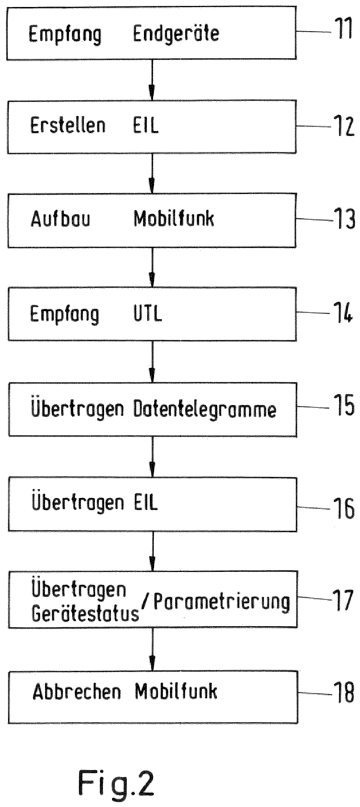

In nicht dargestellten Recheneinheiten der Endgeräte 2.X, der Datensammler 3.X und der Zentrale 4 ist im Zusammenwirken der Kommunikation zwischen den verschiedenen Geräten ein erfindungsgemäßes Verfahren 10, 20 und/oder 30 zur Übertragung der Daten aus den Endgeräten 2.X zu der Zentrale 4 implementiert. Das Verfahren 10 gemäß einer ersten Ausführungsform wird nachfolgend mit Bezug auf Figur 2 beschrieben.

Innerhalb eines Auslesezeitraums empfängt der Datensammler 3.X mindestens einmal die Datentelegramme aller für ihn empfangbaren Endgeräte 2.X und speichert diese in seinem Speicher ab, sofern keine Selektionsvorschrift für die Speicherung vorliegt. Eine solche Selektionsvorschrift kann in Form einer Speicherliste in der Recheneinheit des Datensammlers 3.X gespeichert sein. Dies wird nachfolgend bei der Beschreibung einer anderen Ausführungsform noch ausführlicher beschrieben und ist ggf. Teil dieses Verfahrensschritts.

Für das Empfangen der Datentelegramme der Endgeräte 2.X kann der Datensammler 3.X mindestens einmal in einem Auslesezeitraum (bspw. einem Tag) eine durch Öffnen eines Empfangszeitfensters eine Empfangsphase ausführen, in der er sämtliche Datentelegramme von Endgeräten 2.X innerhalb der Funkreichweite empfängt (Schritt 11).

In dem nachfolgenden Schritt 12 erstellt der Datensammler 3.X eine Empfangsinformationsliste EIL, in der eine Gerätekennung jedes von ihm empfangenen Endgeräts 2.X enthalten ist. Diese Empfangsinformationsliste EIL wird auf Anforderung durch die Zentrale 4 und/oder zu vordefinierten Zeitpunkten von dem Datensammler 3.X an die Zentrale 4 in einem separaten Schritt 16 übertragen. Dies wird nachfolgend noch erläutert.

Jedenfalls liegt der Zentrale 4 nach einem erstmaligen Übertragen der Empfangsinformationsliste EIL durch den Datensammler 3.X die Information vor, welche Endgeräte 2.X durch welchen Datensammler 3.X empfangen werden. Daher ist es erfindungsgemäß im Rahmen des vorgeschlagenen Verfahrens notwendig, dass die Empfangsinformationsliste EIL mindestens einmal erzeugt und übertragen wird, bspw. bei der Inbetriebnahme. Vorzugsweise kann die Empfangsinformationsliste EIL auch im laufenden Betrieb aktualisiert werden, bspw. durch Hinzufügen neu empfangener und/oder Löschen nicht mehr empfangener Endgeräte 3.X. Auch aktualisierte oder neu erstellte Empfangsinformationslisten werden dann von dem Datensammler 3.X an die Zentrale 4 übertragen.

In diesem Sinne ist nicht jeder Schritt des vorbeschriebenen Verfahrens bei jeder Datenübertragung zwischen dem Datensammler 3.X und der Zentrale 4 durchzuführen. So kann, nachdem einmal eine Empfangsinformationsliste EIL erstellt wurde, im Zuge einer üblichen Datenübertragung bspw. auf ein erneutes Erstellen und Übersenden der Empfangsinformationsliste EIL an die Zentrale 4 verzichtet werden.

Beim Empfang der Endgeräte 2.X wird es sicher so sein, dass eine ganze Reihe von Endgeräten 2.X von mehreren Datensammlern 3.X empfangen werden können. Diese Redundanzen können genutzt werden, um beispielsweise bei Ausfall eines der Datensammler 3.X oder einer temporären Störung der Funkkommunikation zwischen einem Endgerät 2.X und einem Datensammler 3.X das Datentelegramm des Endgeräts 2.X in der Zentrale 4 von zumindest einem der Datensammler 3.X zu empfangen, in denen die Datentelegramme dieses Endgeräts 2.X empfangen und gespeichert wurden.

Um zu steuern, welche Datentelegramme welchen Endgeräts 2.X durch den Datensammler 3.X an die Zentrale 4 übertragen werden sollen, erstellt die Zentrale 4 auf Basis der Informationen der (mindestens einmal von den Datensammlern 3.X erstellten und 4 erhaltenen) Empfangsinformationsliste EIL bevorzugt für jede Datenübertragung eine Übertragungsliste UTL mit einer Gerätekennung der Endgeräte 2.X, deren Datentelegramme durch den Datensammler 3.X an die Zentrale weitergeleitet werden sollen. In dieser Übertragungsliste UTL finden sich also Gerätekennungen von Endgeräten 2.X, die ohne Störung der lokalen Funkkommunikation durch den Datensammler 3.X auch tatsächlich empfangen werden. Diese Liste liegt in der Zentrale 4 zur Übertragung an den Datensammler 3.X (Schritt 14) bereit und enthält vorzugsweise die Gerätekennungen der Endgeräte 2.X, deren Daten in der Zentrale 4 noch benötigt werden und bei der nächsten Datenübertragung von dem Datensammler 3.X mit übertragen werden sollen.

Nach dem Empfang der Datentelegramme der Endgeräte 2.X in Schritt 11 und dem Erstellen der Empfangsinformationsliste EIL in Schritt 12 baut der Datensammler 3.X sofort oder zu einem vorbestimmten Zeitpunkt die Mobilfunk-Kommunikationsstrecke 5 zu der Zentrale 4 auf (Schritt 13) und empfängt die dort vorliegende Übertragungsliste UTL von der Zentrale 4 (Schritt 14). Dies stellt eine Aufforderung zur Übertragung der Datentelegramme der Endgeräte 2.X dar, deren Gerätekennungen in der Übertragungsliste UTL gelistet sind.

Nach einer solchen Anforderung überträgt der Datensammler 3.X die in der Übertragungsliste UTL angeforderten Datentelegramme der Endgeräte 2.X in Schritt 15 über die Mobilfunk-Kommunikationsstrecke 5 an die Zentrale 4. Dies kann grundsätzlich auch durch eine direkte Mobilfunkkommunikation zwischen dem Datensammler 3.X und der Zentrale 4 erfolgen. In dem in Figur 1 dargestellten Beispiel überträgt der Datensammler 3.X die Datentelegramme aber in den Cloud-Speicher 6, auf den die Zentrale 4 über den gesicherten Internetzugriff 7 zugreifen kann.

Damit ist das eigentliche Auslesen der Daten der Endgeräte 2.X über den einen Datensammler 3.X innerhalb des einen Auslesezeitraums abgeschlossen.

Nach dem Ausführen des Schritts 15 zum Übertragen der Datentelegramme kann jeder Datensammler 3.X von sich aus oder auf Anforderung durch die Zentrale 4 eine nach dem Empfang der Endgeräte (Schritt 11) in Schritt 12 erstellte bzw. aktualisierte Empfangsinformationsliste EIL an die Zentrale 4 übertragen, so dass in der Zentrale 4 eine aktuelle Empfangsinformationsliste EIL für diesen Datensammler 3.X vorliegt (Schritt 16). Auch dieser Schritt 16 muss aber nicht bei jeder Datenübertragung, d. h. in jedem Auslesezeitraum, erfolgen.

In einem weiteren Schritt 17, der auch mit dem vorstehend beschriebenen Schritt 16 zusammengefasst sein kann, können durch die Zentrale 4 und/oder durch den Datensammler 3.X weitere Daten zum Gerätestatus des Datensammlers 3.X und/oder zur Parametrierung des Datensammlers 3.X (sowie ggf. weitere Daten) übertragen werden. Auch dies ist optional und muss insbesondere nicht in jedem Auslesezeitraum erfolgen.

Nach dem Schritt 15 mit der Übertragung der Datentelegramme oder aber nach den sich optional anschließenden Schritten 16/17 mit der Übertragung der Empfangsinformationsliste EIL und/oder von Daten zum Gerätestatus/zur Parametrierung des Datensammlers 3.X wird in einem Schritt 18 die Mobilfunk-Kommunikationsstrecke 5 durch den Datensammler 3.X oder die Zentrale 4 geschlossen, d. h. die Mobilfunkkommunikation bzw. Mobilfunkverbindung abgebrochen.

Innerhalb des Auslesezeitraums werden die beschriebenen Verfahrensschritte des Verfahrens 10 entsprechend für die anderen Datensammler 3.X durchgeführt, bis die Datentelegramme aller Endgeräte 2.X an die Zentrale 4 übertragen sind.

Vorzugsweise wird für jeden Datensammler 3.X innerhalb eines Auslesezeitraums aber nur einmal eine Mobilfunk-Kommunikationsstrecke 5 aufgebaut, um die Batterie in den Datensammlern 3.X zu schonen und die Effizienz der Datenübertragung zu verbessern.

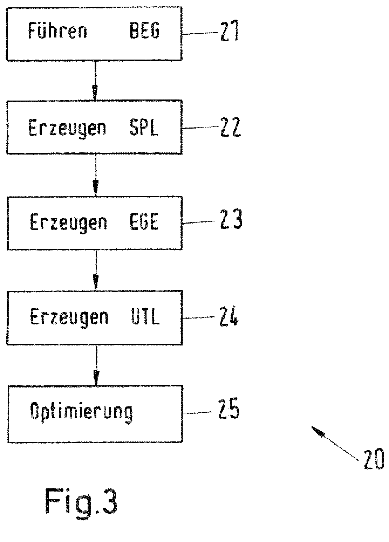

In Figur 3 ist eine weitere Ausführungsform des erfindungsgemäßen Verfahrens 20 dargestellt, das insbesondere einer Optimierung des in Figur 2 erläuterten Verfahrens 10 zum Auslesen dient. Die nachfolgend beschriebenen Schritte 21ff des Verfahrens 20 sind also so zu verstehen, dass diese insbesondere im Anschluss an das in Figur 2 beschriebene Verfahren 20 oder ein später noch beschriebenes Inbetriebnahmeverfahren entsprechend Verfahren 30 durchgeführt werden.

Nach einer Erstinstallation eines Datensammlers 3.X, die später noch einmal ausführlicher beschrieben wird, oder nach der Durchführung des mit Bezug auf Figur 2 erläuterten Verfahrens 10 zum Auslesen von Daten aus in einem Gebäude installierten Endgeräten 2.X liegt in der Zentrale 4 eine Empfangsinformationsliste EIL vor, auf deren Grundlage in der Zentrale 4 weitere Optimierungsschritte des Datenerfassungssystems 1 bzw. des Verfahrens zur Auslesung von Daten in dem Datenerfassungssystem 1 durchgeführt werden können.

Hierfür ist insbesondere vorteilhaft, wenn in der Empfangsinformationsliste EIL neben den Gerätekennungen der durch den Datensammler 3.X empfangenen Endgeräte 2.X für jedes Endgerät 2.X auch eine Information zur Funk- bzw. Empfangsqualität, beispielsweise der bei dem Empfang durch den Datensammler 3.X gemessene RSSI-Wert, und eine Information für die Empfangswahrscheinlichkeit eines Endgerätes 2.X durch den Datensammler 3.X enthält. Diese Werte können durch den Datensammler 3.X beim Empfang eines Datentelegramms ermittelt werden. Eine Information bzw. ein Wert für die Empfangswahrscheinlichkeit des Datentelegramms eines Endgeräts 2.X kann beispielsweise aus der Dauer einer Empfangsphase des Datensammlers 3.X und einer bekannten Häufigkeit der Aussendungen von Datentelegrammen durch die Endgeräte 2.X getroffen werden, indem die Anzahl der tatsächlich empfangenen Datentelegramme mit einer Anzahl erwarteter Datentelegramme bei Empfang jedes Datentelegramms innerhalb der Empfangsphase verglichen wird.

Die in der Empfangsinformationsliste EIL enthaltenen Informationen können durch die Zentrale 4 genutzt werden, um eine Optimierung des Datenerfassungssystems 1 insbesondere im Hinblick auf eine Minimierung der notwendigen Mobilfunkkommunikation durch die Datensammler 3.X an die Zentrale 4 sowie das Batterie- und Speichermanagement der Datensammler 3.X durchzuführen.

Um in der Zentrale 4 Informationen vorzuhalten, welche Endgeräte 2.X durch einen bestimmten Datensammler 3.X seit seiner Installation jemals empfangen wurden, kann die Zentrale 4 eine Backend-Endgeräteliste BEG im Sinne einer Gesamtliste führen, in der die Gerätekennung jedes in einer Empfangsinformationsliste EIL an die Zentrale 4 gemeldeten Endgeräts 2.X, das jemals durch den bestimmten Datensammler 3.X empfangen wurde, zusammen mit den weiteren Werten aus der Empfangsinformationsliste EIL aufgenommen wird. Bei Auswertung einer neu von einem Datensammler erhaltenen Empfangsinformationsliste EIL werden die weiteren Werte zu einer Gerätekennung aktualisiert, und eine eventuell neue Gerätekennung wird in die Backend-Endgeräteliste BEG mit aufgenommen. Zusätzlich kann bei jeder Aktualisierung ein Datum des letzten Empfangs für diese Gerätekennung eingetragen werden.

Dies kann als optionaler Schritt 21 nach jeder Übertragung der Empfangsinformationsliste EIL von dem Datensammler 3.X an die Zentrale 4 durchgeführt werden.

Um die Anzahl der redundant in Datensammlern 3.X gespeicherten Datentelegramme von Endgeräten 2.X zu steuern, ist es besonders vorteilhaft, wenn in der Zentrale 4 für jeden Datensammler 3.X unter Verwendung der Empfangsinformationsliste EIL oder der Backend-Endgeräteliste BEG eine Speicherliste SPL mit Gerätekennungen der Endgeräte 2.X erzeugt wird, deren Datentelegramme in dem jeweiligen Datensammler 3.X gespeichert werden sollen (Schritt 22). Eine solche Speicherliste SPL wird beispielsweise in dem Schritt 17 (Übertragung von Parametrisierdaten) von der Zentrale 4 an den Datensammler 3.X übertragen. Nach Empfang einer solchen Speicherliste SPL speichert der Datensammler 3.X nur die von solchen Endgeräten 2.X empfangenen Datentelegramme, deren Gerätekennung in der Speicherliste SPL enthalten ist.

Dieser Schritt 22 ist auch optional, und muss insbesondere nicht nach jedem Empfang eines Datentelegramms in der Zentrale 4 ausgeführt werden.

In einem weiteren, optionalen Schritt 23 kann die Zentrale 4 eine Endgeräte-Empfangsliste EGE führen, in der für jedes Endgerät 2.X die Datensammler 3.X aufgeführt sind, die Datentelegramme dieses Endgerät 2.X an die Zentrale 4 weiterleiten können. Dies können insbesondere die Datensammler 3.X sein, in deren Speicherliste SPL das betreffende Endgerät 2.X gelistet ist. Dies vereinfacht der Zentrale 4 den Überblick, welche Datensammler 3.X Datentelegramme eines bestimmten Endgeräts 2.X weiterleiten können.

Auch dieser Schritt 23 muss nicht nach jedem Empfang eines Datentelegramms durchgeführt werden.

Das Vorliegen einer solchen Endgeräte-Empfangsliste EGE ermöglicht es der Zentrale 4 aber, nach dem Empfang des Datentelegramms eines bestimmten Endgerätes 2.X von einem Datensammler 3.X festzustellen, welche anderen Datensammler 3.X dieses Datentelegramm desselben Endgerätes 2.X auch noch speichern und übertragen können. Wenn für einen Auslesezeitraum dieses Datentelegramm des bestimmten Endgerät 2.X bereits in der Zentrale 4 vorliegt, ist eine weitere Übertragung genau dieses Datentelegramms durch einen anderen Datensammler 3.X nicht notwendig. Um eine solche Mehrfach-Übertragung zu vermeiden, ist es besonders vorteilhaft, wenn die Zentrale 4 nach jedem Empfang eines Datentelegramms eines bestimmten Endgeräts 2.X überprüft, welche anderen Datensammler 3.X dieses Datentelegramm auch noch übertragen würden. Für diese anderen Datensammler 3.X werden dann in einem Schritt 24 des vorgeschlagenen Verfahrens, vorzugsweise nach jedem Empfang von Datentelegrammen durch einen Datensammler 3.X, die Übertragungslisten UTL überarbeitet derart, dass diese die Gerätekennung des Endgerätes 2.X, dessen Datentelegramm für den aktuellen Auslesezeitraum bereits in der Zentrale 4 vorliegt, nicht mehr enthalten. Diese überarbeiteten Übertragungslisten UTL werden gespeichert und bei dem Auslesen der Endgeräte 2.X im Schritt 14 gemäß dem mit Bezug auf Figur 1 beschriebenen Auslesevorgang an die Datensammler 3.X übertragen, die dann das Datentelegramm dieses Endgeräts 2.X nicht noch einmal über die Mobilfunk-Kommunikationsstrecke 5 zur Zentrale 4 senden.

In einem sich optional anschließenden Schritt 25 können weitere Optimierungen durch die Zentrale 4 durchgeführt werden, so wie dies bereits beschrieben wurde. Dabei entsprechend erzeugte Parametrierungen für die Datensammler 3.X werden in Parametrierdateien abgelegt und während des Bestehens einer Mobilfunkkommunikation in Schritt 17 übertragen.

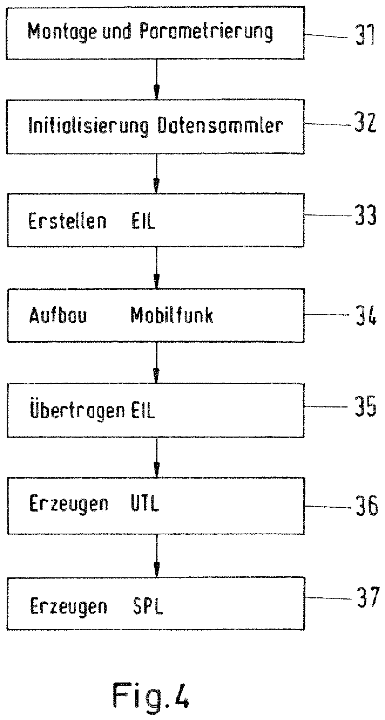

Bei dem zuvor beschriebenen Ablauf der Auslesung von Daten aus Endgeräten 2.X mit den Verfahren 10, 20 kann auch die Inbetriebnahme des Datenerfassungssystems 1 einfach erfolgen, weil bei der Inbetriebnahme grundsätzlich keine anderen Verfahrensschritte ausgeführt werden müssen. Ein typischer Inbetriebnahmevorgang, wie er erfindungsgemäß durchgeführt werden kann, wird nachfolgend mit Bezug auf das Verfahren 30 (Inbetriebnahmeverfahren) in Figur 4 beschrieben.

In einem ersten Schritt 31 werden Datensammler 3.X (sowie ggf. Endgeräte 2.X) entsprechend den örtlichen Gegebenheiten positioniert und durch ein Inbetriebnahmegerät (Service-Tool) lokal vor Ort parametriert. Die Endgeräte 2.X können bereits zeitlich vorher installiert worden sein und senden ihre Daten entsprechend einem vorgegeben Zeitschema aus oder sie werden zusammen mit den Datensammlern installiert und beginnen nach ihrer Inbetriebnahme mit der Datenerhebung (beispielsweise Messen von Verbrauchsdaten) und senden die Daten entsprechend einem vorgegebenen und ggf. bei der Inbetriebnahme in den Endgeräten eingestellten Zeitschema in einer lokalen Funkkommunikation aus.

Neu installierte Datensammler 3.X erhalten in einer Parametrierung beispielsweise Zugangsinformationen für die Mobilfunkkommunikation zu der Zentrale 4 und werden in Betrieb genommen.

Zur Initialisierung der Datensammler 3.X starten diese in einem folgenden Schritt 32 eine Empfangsphase, in der Datentelegramme aller Endgeräte 2.X in Funkreichweite empfangen werden. Alle Endgeräte 2.X, von denen in der Empfangsphase Datentelegramme empfangen wurden, werden in Schritt 33 (analog Schritt 12) in eine Empfangsinformationsliste EIL eingetragen. Nach dem Beenden der Empfangsphase baut der zu initialisierende Datensammler 3.X eine Mobilfunk-Kommunikationsstrecke 5 zu der Zentrale 4 auf (Schritt 34, analog Schritt 13) und überträgt (von sich aus oder auf Anfrage der Zentrale 4) die Empfangsinformationsliste EIL an die Zentrale 4 (Schritt 35), die daraufhin den Datensammler 3.X in ihre Verwaltung (beispielsweise die Backend-Geräteliste BGL oder die Endgeräte-Empfangsliste EGE) aufnimmt und - unter Berücksichtigung der von den anderen Datensammlern 3.X vorliegenden Empfangsinformationslisten EIL - eine Übertragungsliste UTL (Schritt 36 entsprechend Schritt 24) sowie gegebenenfalls eine Speicherliste SPL (Schritt 37 entsprechend Schritt 22) für diesen Datensammler 3.X erzeugt.

Im Rahmen einer weiteren Optimierung können auch beispielsweise Zeitpunkte für die Empfangsphasen und/oder den Aufbau der Mobilfunk-Kommunikationsstrecke 5 zu der Zentrale 4 vorgegeben werden. Dies wurde bereits beschrieben.

Nach der nächsten Empfangsphase des (nun initialisierten) Datensammlers 3.X kann das reguläre Übertragungsverfahren in der beschriebenen Weise (Verfahren 10 und gegebenenfalls Verfahren 20) durchgeführt werden, wobei die Übertragungsliste UTL sowie gegebenenfalls die Speicherliste SPL von der Zentrale 4 an den Datensammler 3.X übertragen werden.

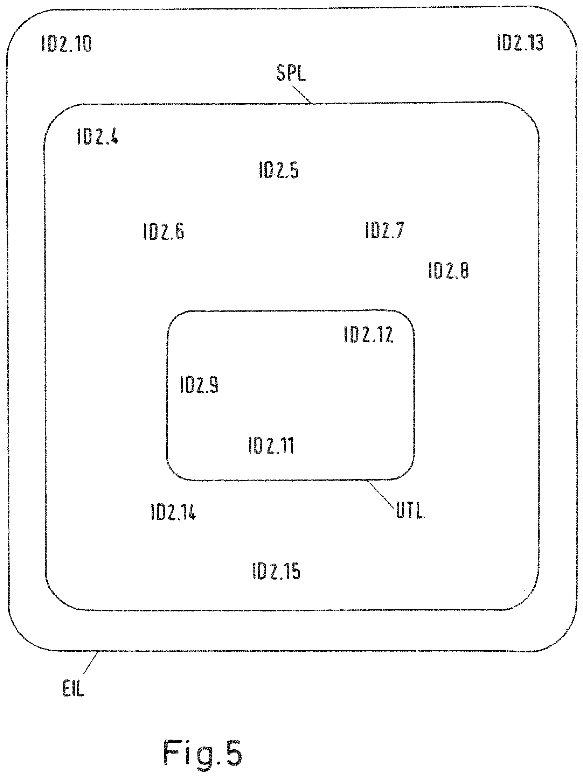

In Figur 5 findet sich noch eine schematische Darstellung der Empfangsinformationsliste EIL, der Speicherliste SPL und der Übertragungsliste UTL gemäß einem Beispiel für das Datenerfassungssysteme 1 gemäß Figur 1. Die Gerätekennungen der Endgeräte 2.X sind dabei der Einfachheit halber als "ID2.X" gekennzeichnet, wobei "X" durch die jeweilige Nummer des Endgeräts entsprechend der grafischen Darstellung in Figur 1 ersetzt wurde. Beispielhaft dargestellt sind die vorgenannten Listen hier für den Datensammler 3.2 gemäß Figur 1.

In einer Empfangsphase (bei der Inbetriebnahme oder im laufenden Betrieb) hat der Datensammler 3.2 beispielsweise die Endgeräte 2.4 bis 2.15 empfangen. Der Datensammler 3.1 hat die Endgeräte 2.1 bis 2.8 sowie 2.10 und 2.13 und der Datensammler 3.3 die Endgeräte 2.10 bis 2.21 empfangen. Daraus ergibt sich, dass einige Endgeräte durch zwei Datensammler 3.X, andere Endgeräte aber nur durch einen Datensammler 3.X empfangen wurden.

Um eine angemessene Redundanz zu gewährleisten, sei hier vorgeschlagen, dass die Zentrale 4 vorgibt, dass Datentelegramme - sofern möglich - zumindest durch zwei Datensammler 3.X gespeichert werden sollen, damit bei Ausfall eines Datensammlers 3.X oder einer gestörten Funkkommunikation zu einem Datensammler 3.X der andere Datensammler das Datentelegrammen des betroffenen Endgerätes 2.X noch zu der Zentrale 4 übertragen kann.

Ferner sei angenommen, dass die Datensammler 3.1 und 3.3 in dem aktuellen Auslesezeitraum die Datentelegramme der Endgeräte 2.1 bis 2.8 und 2.10 (Datensammler 3.1) und die Datentelegramme der Endgeräte 2.13 bis 2.21 (Datensammler 3.3) zu der Zentrale 4 übertragen haben. Somit benötigt die Zentrale 4 für den aktuellen Auslesezeitraum nur noch die Datentelegramme der Endgeräte 2.9, 2.11 und 2.12.

Entsprechend finden sich in der Übertragungsliste UTL für den Datensammler 3.2 nur noch die Endgerätekennungen für diese Endgeräte.

Aufgrund der vorerwähnten Redundanz-Vorgabe sollen Datentelegramme eines Endgerätes 2.X in mindestens zwei Datensammlern 3.X gespeichert werden. Es sei angenommen, dass Speicherlisten SPL für den ersten Datensammler 3.1 und den dritten Datensammler 3.3 die Gerätekennungen für die Endgeräte 2.10 und 2.13 enthalten, so dass die Datentelegramme dieser Endgeräte auch ohne Speichern in dem Datensammler 3.2 die Redundanz-Vorgabe erfüllen. Daher sind die Gerätekennungen für die Endgeräte 2.10 und 2.13 nicht mehr in der Speicherliste SPL für den Datensammler 3.2 enthalten. Alle anderen von dem Datensammler 3.2 empfangenen Datentelegramme der übrigen Endgeräte 2.X sind in der Speicherliste SPL für den Datensammler 3.2 aufgenommen.

Die Empfangsinformationsliste EIL enthält ergänzend schließlich nur noch die Gerätekennungen der beiden Endgeräte 2.10 und 2.13, deren Datentelegramme bereits durch die Datensammler 3.1 und 3.3 empfangen und gespeichert werden. Diese Datentelegramme der Endgeräte 2.10 und 2.13 werden daher in dem Datensammler 3.2 überhaupt nicht gespeichert.

Dieses Beispiel dient nur der Erläuterung, wie die Empfangsinformationsliste EIL, die Speicherliste SPL und die Übertragungsliste UTL für das in Figur 1 beispielhaft gezeigte Daten Erfassungssystem 1 für einen Auslesezeitraum aussehen könnte. Diese Listen sind dynamisch und können sich mit Änderungen der Empfangssituation oder der Verwaltung der Zuordnung von Endgeräten 2.X zu Datensammlern 3.X durch die Zentrale 4 mit der Zeit ändern.

### Bezugszeichenliste:

- 1: Datenerfassungssystem
- 2.X: Endgeräte
- 3.X: Datensammler
- 4: Zentrale
- 5: Mobilfunk-Kommunikationsstrecke
- 6: Cloud-Speicher
- 7: Internetzugriff
- 8.X: Gebäude

- 10: Verfahren
- 11: Empfang Endgeräte
- 12: Erstellen Empfangsinformationsliste
- 13: Aufbau Mobilfunk-Kommunikationsstrecke
- 14: Übertragen Übertragungsliste
- 15: Übertragen Datentelegramme
- 16: Übertragen Empfangsinformationsliste
- 17: Übertragen Gerätestatus/Parametrierung
- 18: Abbrechen Mobilfunk-Kommunikationsstrecke

- 20: Verfahren
- 21: Führen Backend-Geräteliste
- 22: Erzeugen Speicherliste SPL
- 23: Führen Endgeräte-Empfangsliste
- 24: Erzeugen Übertragungslisten
- 25: Durchführen weiterer Optimierung

- 30: Inbetriebnahmeverfahren
- 31: Montage und Parametrierung von Datensammlern und/oder Endgeräten
- 32: Initialisierung der Datensammler
- 33: Erstellen Empfangsinformationsliste
- 34: Aufbau Mobilfunk-Kommunikationstrecke
- 35: Übertragen Empfangsinformationsliste
- 36: Erstellen Übertragungsliste
- 37: Erzeugen Speicherliste

- EIL: Empfangsinformationsliste
- UTL: Übertragungsliste
- BEG: Backend-Geräteliste
- SPL: Speicherliste
- EGE: Endgeräte-Empfangsliste

## Patentansprüche

1. Verfahren zum Auslesen von Daten aus in einem Gebäude (8.X) installierten Endgeräten (2.X), bei dem die Daten von den Endgeräten (2.X) an in dem Gebäude (8.X) installierte Datensammler (3.X) übertragen werden und von den Datensammlern (3.X) an eine Zentrale (4) weiter übertragen werden, in der die Daten der Endgeräte (2.X) gespeichert werden, wobei
a) jedes Endgerät (2.X) die Daten als Datentelegramm in einer Funkkommunikation aussendet,
b) die Datentelegramme des Endgeräts (2.X) von einem in Funkreichweite des Endgeräts (2.X) installierten Datensammler (3.X) empfangen werden,
c) der Datensammler (3.X) die Daten über eine Mobilfunk-Kommunikationsstrecke (5) an die Zentrale (6) weiterleitet,
wobei das Verfahren für die Organisation der Datenübertragung vorsieht, dass
• jeder Datensammler (3.X) Datentelegramme aller für ihn empfangbaren Endgeräte (2.X) empfängt und eine Empfangsinformationsliste (EIL) erstellt, in der eine Gerätekennung jedes von ihm empfangenen Endgeräts (2.X) enthalten ist,
• jeder Datensammler (3.X) die Empfangsinformationsliste (EIL) über die Mobilfunk-Kommunikationsstrecke (5) an die Zentrale (4) überträgt,
• die Zentrale (4) für jeden Datensammler (3.X) eine Übertragungsliste (UTL) mit einer Gerätekennung der Endgeräte (2.X) erstellt, deren Datentelegramme an die Zentrale (4) weitergeleitet werden sollen,
• der Datensammler (3.X) nach Erhalt der Übertragungsliste (UTL) von der Zentrale (4) über die Mobilfunk-Kommunikationsstrecke (5) die empfangenen Datentelegramme der Endgeräte (2.X), deren Gerätekennung in der Übertragungsliste (UTL) enthalten ist, über die Mobilfunk-Kommunikationsstrecke (5) an die Zentrale (4) überträgt,
**dadurch gekennzeichnet, dass**
für die Durchführung der Datenübertragung von der Zentrale (4) zur Anforderung einer Datenübertragung von einem Datensammler (3.X) an die Zentrale (4) jeweils eine Übertragungsliste (UTL) an den Datensammler (3.X) übertragen wird und der Datensammler (3.X) die Daten in Reaktion auf eine solche Anforderung an die Zentrale (4) überträgt.

2. Verfahren nach Anspruch 1, **dadurch gekennzeichnet, dass** in dem Auslesezeitraum, in dem die Daten der Endgeräte einmal an die Zentrale weitergeleitet werden sollen, maximal einmal die Mobilfunk-Kommunikationsstrecke (5) zwischen dem Datensammler (3.X) und der Zentrale (4) zur Durchführung der Datenübertragung aufgebaut wird, wobei zeitlich nacheinander zuerst die Übertragungsliste (UTL) von der Zentrale (4) an den Datensammler (3.X) und anschließend die Daten von dem Datensammler (3.X) an die Zentrale (4) übertragen werden.

3. Verfahren nach Anspruch 1 oder 2, **dadurch gekennzeichnet, dass** die Zentrale (4) vor dem Eintragen einer Gerätekennung eines Endgeräts (2.X) in die Übertragungsliste (UTL) für einen Datensammler überprüft, ob ein aktuelles Datentelegramm des Endgeräts (2.X) bereits an die Zentrale (4) weitergeleitet wurde, und die Gerätekennung des Endgeräts (2.X) nur dann einträgt, wenn ein aktuelles Datentelegramm noch nicht an die Zentrale (4) weitergeleitet wurde.

4. Verfahren nach einem der vorhergehenden Ansprüche, **dadurch gekennzeichnet, dass** die Zentrale eine als Endgeräte-Empfangsliste (EGE) bezeichnete Geräteliste führt, in der für jedes Endgerät (2.X) diejenigen Datensammler (3.X) aufgeführt sind, die Datentelegramme dieses Endgeräts (2.X) an die Zentrale (4) weiterleiten können.

5. Verfahren nach einem der vorhergehenden Ansprüche, **dadurch gekennzeichnet, dass** der Datensammler (3.X) bei dem Empfang eines Datentelegramms von einem Endgerät (2.X) einen Wert für die Empfangsqualität und/oder einen Wert für die Empfangswahrscheinlichkeit des Datentelegramms ermittelt und in die Empfangsinformationsliste (EIL) einträgt.

6. Verfahren nach einem der vorhergehenden Ansprüche, **dadurch gekennzeichnet, dass** in der Zentrale (4) für jeden Datensammler (3.X) unter Verwendung der Empfangsinformationsliste (EIL) eine Speicherliste (SPL) mit Gerätekennungen der Endgeräte (2.X), deren Datentelegramme in dem Datensammler (3.X) nach dem Empfang gespeichert werden sollen, erzeugt und an den Datensammler (3.X) übertragen wird, wobei der Datensammler (3.X) nach Empfang einer solchen Speicherliste (SPL) nur die von solchen Endgeräten (2.X) empfangenen Datentelegramme speichert, deren Gerätekennung in der Speicherliste (SPL) enthalten ist.

7. Verfahren nach einem der vorhergehenden Ansprüche, **dadurch gekennzeichnet, dass** die Datentelegramme der Endgeräte (2.X) zumindest teilweise verschlüsselt sind und in dem Datensammler (3.X) unverändert gespeichert werden.

8. Verfahren nach einem der vorhergehenden Ansprüche, **dadurch gekennzeichnet, dass** jeder Datensammler (3.X) zu vorgegebenen Zeitpunkten innerhalb eines Auslesezeitraums eine Empfangsphase zum Empfang von durch die Endgeräte (2.X) ausgesandten Datentelegrammen ausführt und nach der Empfangsphase die Mobilfunk-Kommunikationsstrecke (5) zu der Zentrale aufbaut.

9. Verfahren nach einem der vorhergehenden Ansprüche, **dadurch gekennzeichnet, dass** jeder Datensammler (5) nach dem Aufbau der MobilfunkKommunikationsstrecke (5) eine Anforderung von der Zentrale (4) empfängt, die eine oder mehrere der nachfolgenden Informationen enthält:
• Übertragungsliste (UTL)
• Anforderung zur Übertragung von Datentelegrammen der Endgeräte
• Speicherliste (SPL)
• Anforderung der Empfangsinformationsliste (EIL)
• Anforderung von Gerätestatusdaten der Datensammler (3.X) und Parametrierdaten für Datensammler (3.X)
• Zeitpunkte für das Durchführen einer Empfangsphase und/oder das Aufbauen der Mobilfunk-Kommunikationsstrecke (5).

10. Verfahren nach einem der vorhergehenden Ansprüche, **dadurch gekennzeichnet, dass** die Zentrale (4) ein Batteriemanagement und/oder eine Verwaltung der Datensammler (3.X) zur Kommunikationsoptimierung und Funknetzstabilität durchführt.

11. Datenerfassungssystem zum Auslesen von Daten mit
• Endgeräten (2.X), die in einem Gebäude (8.X) installiert sind, Daten erfassen und als Datentelegramme in einer Funkkommunikation aussenden,
• Datensammlern (3.X), die in Funkreichweite mindestens eines der Endgeräte (2.X) installiert sind und Datentelegramme mit den Daten der Endgeräte (2.X) in Funkreichweite empfangen und in ihrem Speicher speichern,
• einer Zentrale (4), die von jedem der Datensammler über eine Mobilfunk-Kommunikationsstrecke (5) ansprechbar ist und über die Mobilfunk-Kommunikationsstrecke (5) die Datentelegramme der Endgeräte (2.X) von dem Datensammler (3.X) weitergeleitet erhält,
**dadurch gekennzeichnet, dass** jedes Endgerät (2.X), jeder Datensammler (3.X) und die Zentrale (4) jeweils eine Recheneinheit aufweisen, die zur Durchführung des Verfahrens nach einem der Ansprüche 1 bis 10 eingerichtet ist.

12. Datenerfassungssystem nach Anspruch 11, **dadurch gekennzeichnet, dass** zumindest ein Teil der Endgeräte (2.X) Sensorgeräte, Verbrauchserfassungsgräte und/oder Rauchwarnmelder sind.

13. Datenerfassungssystem nach Anspruch 11 oder 12, **dadurch gekennzeichnet, dass** Endgeräte (2.X) und Datensammler (3.X) batteriebetriebene Geräte sind.
